(19) Europäisches Patentamt
European Patent Office
Office européen des brevets

(11) Publication number: 0 423 418 A2

# (12) EUROPEAN PATENT APPLICATION

(21) Application number: 90107366.8

(51) Int. Cl.[5]: G11B 11/10

(22) Date of filing: 18.04.90

(30) Priority: 19.10.89 JP 272642/89

(43) Date of publication of application: 24.04.91 Bulletin 91/17

(84) Designated Contracting States: AT BE CH DE DK ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100(JP)

(72) Inventor: Mizumoto, Kunihiko, C/o Mitsui Petrochem. Ind. Ltd
3 Chigusa-Kaigan
Ichihara-shi, Chiba(JP)
Inventor: Hashimoto, Hidehiko C/o Mitsui Pet.chem. Ind. Ltd
3 Chigusa-Kaigan
Ichihara-shi, Chiba(JP)
Inventor: Todo, Akira, C/o Mitsui Pet.chem. Ind. Ltd
3 Chigusa-Kaigan
Ichihara-shi, Chiba(JP)

(74) Representative: Hansen, Bernd, Dr. Dipl.-Chem. et al
Hoffmann, Eitle & Partner Patent- und Rechtsanwälte Arabellastrasse 4
W-8000 München 81(DE)

## (54) Magnetooptical recording media.

(57) Optical recording media disclosed herein are excellent in adhesion between the substrate and the magnetooptical recording film, as well as in oxidation resistance and long term-stability of magnetooptical recording characteristics, said substrate containing a cycloolefin random copolymer composition and having a specific structure.

EP 0 423 418 A2

## MAGNETOOPTICAL RECORDING MEDIA

### FIELD OF THE INVENTION

This invention relates to magnetooptical recording media excellent in adhesion between a substrate and a magnetooptical recording film, oxidation resistance and magnetooptical recording characteristics.

### BACKGROUND OF THE INVENTION

It is known that magnetooptical recording films comprising transition metals such as iron, cobalt, etc. and rare earth elements such as terbium (Tb), gadolinium (Gd), etc., have an easy axis of magnetization perpendicular to the film and are capable of forming a small inverse magnetic domain with magnetization antiparallel to the magnetization of the film. By corresponding the existence or nonexistence of this inverse magnetic domain to "1" or "0", it becomes possible to record a digital signal on such magnetooptical recording films as mentioned above.

As magnetooptical recording films composed of such transition metals and rare earth elements as mentioned above, there are disclosed those of a Tb-Fe system containing 15-30 atom% of Tb, for example, in Japanese Patent Publication No. 20691/1982. There are also used magnetooptical recording films of Tb-Fe-Co, Gd-Tb-Fe and Dy-Tb-Fe-Co system.

Though these magnetooptical recording films have excellent recording and reproducing characteristics, they still involve such a serious problem from a practical standpoint that they are subject to oxidation in the course of ordinary use thereof and their characteristics come to change with the lapse of time.

The mechanism of oxidation deterioration of magnetooptical recording films containing such transition metals and rare earth elements as mentioned above is discussed, for example, in Journal of Applied Magnetism Society of Japan, Vol.9, No.2, pp.93-96, and this paper reports that this mechanism of oxidative deterioration may be classified into three types as mentioned below.

a) Pitting corrosion

By pitting corrosion is meant the occurrence of pinholes in the magnetooptical recording film. This corrosion proceeds mainly under the circumstances of high humidity, and it markedly proceeds, for example, in the recording films of such a system as Tb-Fe, Tb-Co or the like.

b) Surface oxidation

Surface oxide layers are formed on magnetooptical recording films, whereby Kerr-rotation angle $\theta k$ of the films changes with time and eventually comes to decrease.

c) Selective oxidation of rare earth element

Rare earth elements present in magnetooptical recording films are selectively oxidized, thereby coercive force Hc of the films comes to largely change with time.

Various attempts have heretofore been made to inhibit such oxidative deterioration of magnetooptical recording films as mentioned above. For instance, there is proposed a procedure in which a magnetooptical recording film is designed to have a three- layer structure wherein the film is sandwiched between anti-oxidizing protective layers such as those of $Si_3N_4$, SiO, $SiO_2$, AlN, etc.

Furthermore, various attempts are being made to improve resistance to oxidation of magnetooptical recording films by incorporating a third component metal into the recording films of Tb-Fe, Tb-Co system and the like.

For instance, Journal of Applied Magnetism Society of Japan cited above discloses an attempt to improve resistance to oxidation of magnetooptical recording films of a Tb-Fe or a Tb-Co system by

incorporation into the films of such third component metal as Co, Ni, Pt, Al, Cr, Ti and Pd in an amount of up to 3.5 atom%.

With the view of improving resistance to oxidation of magnetooptical recording films, a teaching on the magnetooptical recording films which are obtained by adding Pt, Al, Cr and Ti in an amount up to 10 atom% to Tb-Fe or Tb-Fe-Co is disclosed in page 209 of the Proceedings of The Ninth Conference of Applied Magnetism Society of Japan (November 1985).

Japanese Patent L-O-P Publn. No. 255546/1986 discloses magnetooptical recording films which have been improved in resistance to oxidation by addition such noble metals as Pt, Au, Ag, Ru, Rh, Pd, Os and Ir within such a range that the Kerr-rotation angle necessary for reproduction to magnetooptical recording films comprising rare earth elements and transition metals.

As described above, those magnetooptical recording films are known which are prepared by adding third metal such as Co, Ni, Pt, Al, Cr, Ti and Pd to the conventional Tb-Fe system or the Tb-Co system. Magnetooptical recording media manufactured by laminating such a conventional substrate as composed of polycarbonate resin with the magnetooptical recording film above-mentioned have still insufficient oxidation resistance and long-term stability of magnetooptical recording characteristics thereof. The magnetooptical recording media have a low C/N ratio and a high noise level due to the high double refractive index of the substrate thereof, and also show insufficient adhesion between the magnetooptical recording film and the substrate. Accordingly, substrates prepared from polycarbonate require heat treatment to be sufficiently free from water. They also require plasma surface treatment to have improved adhesion to a magnetooptical recording film.

The present inventors have conducted researches for improving the properties of the above-described magnetooptical recording media, and have discovered that oxidation deterioration of the magnetooptical recording media is caused not only by the composition of the magnetooptical recording film but also by a conventional substrate itself which is laminated with the magnetooptical recording film, and that insufficient adhesion of the conventional substrate such as a polycarbonate substrate to the magnetooptical recording film results in insufficient prevention of oxidation in the magnetooptical recording film.

The present inventors further prosecuted researches based on the information as mentioned above, and eventually have found that magnetooptical recording media which are excellent in long-term stability of magnetooptical recording characteristics, adhesion between a substrate and a magnetooptical recording film and oxidation resistance, and which have a high C/N ratio can be obtained by using a substrate composed of a random copolymer of ethylene and cycloolefin having a specific structure and by laminating the substrate with a specific magnetooptical recording film.

## OBJECT OF THE INVENTION

The present invention is intended for solving such various problems associated with the prior art as mentioned above, and an object of the invention is to provide magnetooptical recording media excellent in adhesion between the substrate and magnetooptical recording film and, moreover, excellent in oxidation resistance, magnetooptical recording characteristics and long-term stability of the magnetooptical recording characteristics.

## SUMMARY OF THE INVENTION

The magnetooptical recording media of the present invention has a substrate and a magnetooptical recording film having thereon, said substrate being formed from a cycloolefin random copolymer composition which contains

(A) a cycloolefin random copolymer of ethylene and a cycloolefin represented by the following general formula [I], said copolymer having an intrinsic viscosity [$\eta$] of from 0.05 to 10 dl/g as ineasured at 135° C in decalin and a softening temperature (TMA) of at least 70° C, and

(B) a cycloolefin random copolymer of ethylene and a cycloolefin represented by the following general formula [I], said copolymer having an intrinsic viscosity [$\eta$] of from 0.05 to 5 dl/g as measured at 135° C in decalin and a softening temperature (TMA) of less than 70° C, and a weight ratio of said component (A)/said component (B) ranging from 100/0.1 to 100/10.

General formula

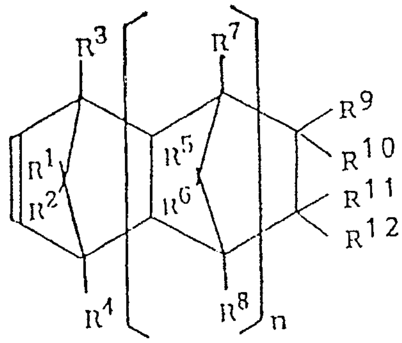

···[I]

wherein n is 0 or a positive integer, $R^1$ to $R^{12}$ are the same or different, and each reperesents a hydrogen atom, a halogen atom or a hydrocarbon group and $R^9$ to $R^{12}$, when taken together, may form a mono- or poly-cyclic hydrocarbon ring which may optionally have double bond or bonds, or $R^9$ and $R^{10}$ or $R^{11}$ and $R^{12}$, when taken together, may form an alkylidene group.

In the cycloolefin random copolymer as mentioned above, the cycloolefin component has a structure represented by the general formula [II].

General formula

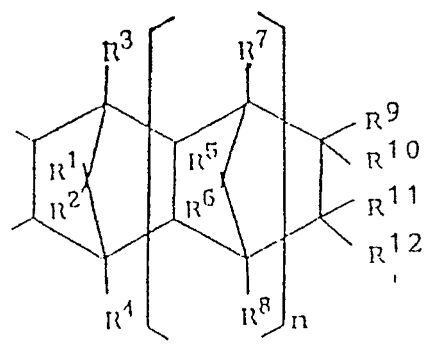

···[II]

wherein n is 0 or a positive integer, $R^1$ to $R^{12}$ are the same or different, and each reperesents a hydrogen atom, a halogen atom or a hydrocarbon group and $R^9$ to $R^{12}$, when taken together, may form a mono- or poly-cyclic hydrocarbon ring which may optionally have double bond or bonds, or $R^9$ and $R^{10}$ or $R^{11}$ and $R^{12}$, when taken together, may form an alkylidene group.

In the magnetooptical recording media of the present invention, an amorphous alloy film is used as the magnetooptical recording film formed on the aforementioned substrate, which is comprising (i) at least one element selected from 3d transition metals and (iii) at least one element selected from rare earth elements and having a magnetic easy axis perpendicular to the film.

## BRIEF DESCRIPTION OF THE DRAWINGS

Figs. 1, 2, 3 and 4 are sectional views of magnetooptical recording media of the present invention.

Fig. 5 is a graphical showing of a relationship between the Co/(Fe + Co) ratio by atom (atomic ratio) and the noise level (dBm) of a magnetooptical recording film containing Pt.

Fig. 6 is a graphical showing of a relationship between the Co/(Fe + Co) ratio by atom (atomic ratio) and the noise level (dBm) of a magnetooptical recording film containing Pd.

Fig. 7 is a graphical showing of a relationship between the Co/(Fe + Co) ratio by atom (atomic ratio) and the erasion deterioration in terms of the ΔC/N in dB of a magnetooptical recording film.

Fig. 8 is a graphical showing of a relationship between the Pt and/or Pd content in atom% and the oxidation resistance in term of the ΔC/N in dB on magnetooptical recording films containing Pt and/or

Pd, respectively.

Fig. 9 is a graphical showing of a relationship between the bias magnetic field on Oe and the C/N ratio on magnetooptical recording films, one containing Pt and the other containing no Pt.

Fig. 10 is a graphical showing of a relationship between the Pt or Pd content in atom% and the minimum bias magnetic filed H sat. in Oe on magnetooptical recording films containing Pt and Pd, respectively.

The results shown in Figs. 5 to 10 were obtained on magnetooptical recording media, each having a structure as shown in Fig. 1 and comprising a substrate of a cycloolefin random copolymer composition obtained in Referential Example 1 and thereon a magnetooptical recording film of a thickness of 1000 Å laminated.

## DETAILED DESCRIPTION OF THE INVENTION

The magnetooptical recording media of the present invention are illustrated below in detail.

As shown in Fig. 1, the magnetooptical recording media 1 of the invention has a structure wherein a magnetooptical recording film 3 is laminated on a substrate 2.

As shown in Fig. 2, the magnetooptical recording media 1 of the invention may have a structure wherein an magnetooptical recording film 3 and a reflection film 4 are laminated in this order on a substrate 2.

Furthermore, the magnetooptical recording media 1 of the invention may have a structure wherein a enhancement film 5 is provided between the substrate 2 and the magnetooptical recording film 3, as shown in Fig. 3.

As shown in Fig. 4, the magnetooptical recording media 1 of the invention may have a structure wherein a enhancement film 5 is provided between the substrate 2 and the magnetooptical recording film 3 and the other enhancement film 5 is provided between the magnetooptical recording film 3 and the reflection film 4.

In the magnetooptical recording media of the present invention, the enlancement film as mentioned above is preferably composed of silicon compound such as $Si_3N_4$ and SiNx ($0<x<4/3$), AlN, ZnS, Si or CdS.

In the magnetooptical recording media 1 of the present invention, the above-mentioned substrates 2 are formed from a cycloolefin random copolymer composition comprising

(A) a cycloolefin random copolymer of ethylene and a cycloolefin represented by the following general formula [I] and having and intrinsic viscosity [η] of from 0.05 to 10 dl/g as measured at 135°C in decalin and a softening temperature (TMA) of at least 70°C, and

(B) a cycloolefin random copolymer of ethylene and a cycloolefin represented by the following general formula [I] and having an intrinsic viscosity [η] of from 0.05 to 5 dl/g as measured at 135°C in decalin and a softening temperature (TMA) of less than 70°C,

and having a weight ratio of said component (A)/said component (B) ranging from 100/0.1 to 100/10.

General formula

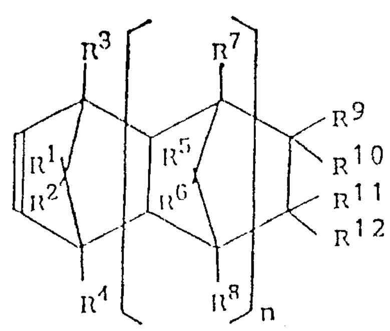

...[I]

wherein n is 0 or a positive integer, preferably not more than 3, $R^1$ to $R^{12}$ are the same or different, and each reperesents a hydrogen atom, a halogen atom or a hydrocarbon group provided that $R^9$ to $R^{12}$, when taken together, may form a mono- or poly-cyclic hydrocarbon ring which may optionally have double bond or bonds, or $R^9$ and $R^{10}$ or $R^{11}$ and $R^{12}$, when taken together, may form an alkylidene group.

Further explanation of the cycloolefin represented by the general formula [I] will be given below. The cycloolefin represented by the general formula [I] may also be represented by the following general formula

[I-a].

General formula

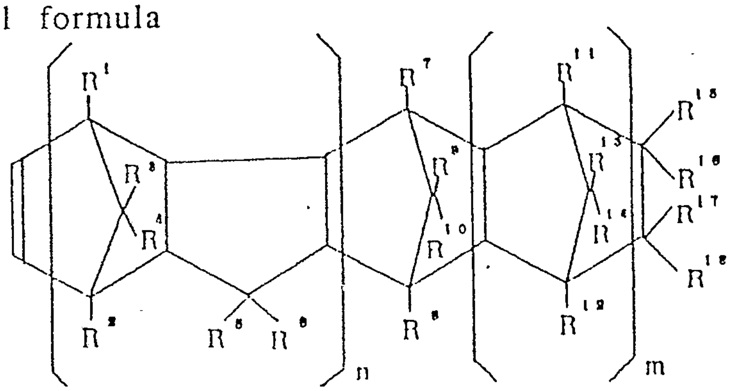

...[I-a]

In the general formula [1-a], n is 0 or 1, m is 0 or positive integer, $R^1$ to $R^{18}$ represent each a atom or a group selected from the group of a hydrogen atom, a halogen atom and a hydrocarbon group.

$R^{15}$ to $R^{18}$, when taken together, may form a mono- or polycyclic hydrocarbon ring which may optionally have double bond or bonds.

Further more, $R^{15}$ and $R^{16}$, or $R^{17}$ and $R^{18}$, when taken together, may form an alkylidene group.

In the above-mentioned cycloolefin random copolymers (A) and (B), their cycloolefin component has a structure represented by the general formula [II].

General formula

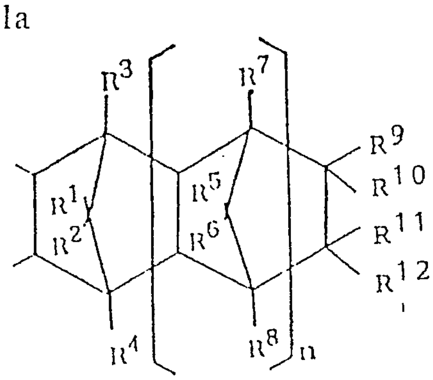

···[II]

wherein n is 0 or a positive integer, $R^1$ to $R^{12}$ are the same or different, and each reperesents a hydrogen atom, a halogen atom or a hydrocarbon group provided that $R^9$ to $R^{12}$, when taken together, may form a mono- or poly-cyclic hydrocarbon ring which may optionally have double bond or bonds, or $R^9$ and $R^{10}$ or $R^{11}$ and $R^{12}$, when taken together, may form an alkylidene group.

When the cycloolefin is represented by the general formula [1-a], in the above-mentioned cycloolefin random copolymer (A) and (B), their cycloolefin component has a structure represented by the general formula [II-a].

General formula

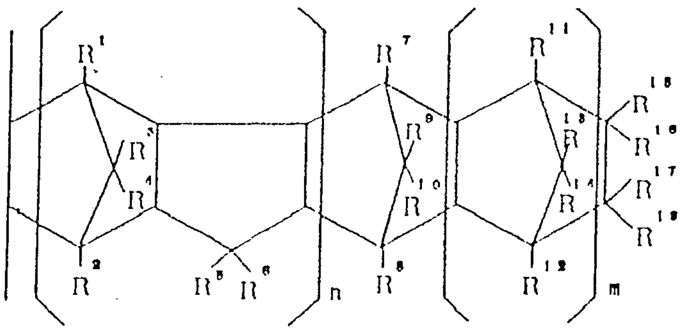

...[II-a]

In the general formula [II-a], n is 0 or 1, m is 0 or positive integer, $R^1$ to $R^{18}$ represent each an atom or a group selected from the group of a hydrogen atom, a halogen atom and a hydrocarbon group.

$R^{15}$ to $R^{18}$, when taken together, may form a mono- or polycyclic hydrocarbon ring which may optionally have double bond or bonds.

Further more, $R^{15}$ and $R^{16}$, or $R^{17}$ and $R^{18}$, when taken together, may form an alkylidene group.

The cycloolefin which is a constituent component of the above-mentioned cycloolefin random compolymers is at least one cycloolefin selected from unsaturated monomers represented by the general formula [I]. The cycloolefins represented by the general formula [I] may easily be prepared by condensation reaction of cyclopentadienes with appropriate olefins or cycloolefins by Diels-Alder reaction.

The concrete example of the cycloolefins represented by the general formula [I] includes 1,4,5,8-dimethano-1,2,3,4,4a,5,8,8a-octahydronaphthalene (Tetracyclo [4,4,0,$1^{2.5}$,$1^{7.10}$]-3-dodecene), such octahydronaphthalenes as 2-methyl-1,4,5,8-dimethano-1,2,3,4,4a,5,8,8a-octahydronaphthalene, 2-ethyl-1,4,5,8-dimethano-1,2,3,4,4a,5,8,8a-octahydronaphthalene, 2-propyl-1,4,5,8-dimethano-1,2,3,4,4a,5,8,8a-octahydronaphthalene, 2-hexyl-1,4,5,8-dimethano-1,2,3,4,4a,5,8,8a-octahydronaphthalene, 2,3-dimethyl-1,4,5,8-dimethano-1,2,3,4,4a,5,8,8a-octahydronaphthalene, 2-methyl-3-ethyl-1,4,5,8-dimethano-1,2,3,4,4a,5,8,8a-octahydronaphthalene, 2-chloro-1,4,5,8-dimethano-1,2,3,4,4a,5,8,8a-octahydronaphthalene, 2-bromo-1,4,5,8-dimethano-1,2,3,4,4a,5,8,8a-octahydronaphthalene, 2-fluoro-1,4,5,8-dimethano-1,2,3,4,4a,5,8,8a-octahydronaphthalene, 2,3-dichloro-1,4,5,8-dimethano-1,2,3,4,4a,5,8,8a-octahydronaphthalene, 2-cyclohexyl-1,4,5,8-dimethano-1,2,3,4,4a,5,8,8a-octahydronaphthalene, 2-n-butyl-1,4,5,8-dimethano-1,2,3,4,4a,5,8,8a-octahydronaphthalene, 2-isobutyl-1,4,5,8-dimethano-1,2,3,4,4a,5,8,8a-octahydronaphthalene, etc.

Furthermore, the cycloolefin represented by the general formula [I] includes, bicyclo[2,2,1]hepto-2-en derivatives, tetracyclo[4,4,0,$1^{2.5}$,$1^{7.10}$]-3-dodecene derivatives, hexacyclo[6,6,1 ,$1^{3.6}$,$1^{10.13}$,$0^{2.7}$,$0^{9.14}$]-4-heptadesene, derivaties, octacyclo [8,8,0,$1^{2.9}$,$1^{4.7}$,.$1^{11.18}$,$1^{13.16}$,$0^{3.8}$, $0^{12.17}$]-5-docosene derivaties, pentacyclo [8,8,0,$1^{2.9}$,$1^{4.7}$,$1^{11.18}$,$1^{13.16}$ $0^{3.8}$,$0^{12.17}$] -5-docosene derivatives, pentacyclo[6,6,1,$1^{3.6}$,$0^{2.7}$,$0^{9.14}$]-4-hexadecene derivatives, heptacyclo-5-icosene derivatives, heptacyclo-5-henicosene derivatives, toricyclo[4,3,0,$1^{2.5}$]-3-decene derivatives toricyclo[4,3,0,$1^{2.5}$]-3-undecene derivatives, pentacyclo[6,5,1,$1^{3.6}$,$0^{2.7}$,$0^{9.13}$]-4-pentadecene derivatives, pentacyclopentadecadiene derivatives, pentacyclo [4,7,0,$1^{2.5}$,$0^{8.13}$, $1^{9.12}$]-3-pentadecene derivatives, pentacyclo[7,8,0,$1^{3.6}$,$0^{2.7}$,$1^{10.17}$,$0^{11.16}$,$1^{12.15}$]-4-icosene derivatives, and nonacyclo-[9,10,1,1,4.7,$0^{3.8}$,$0^{2.10}$,$0^{12.21}$,$1^{13.20}$,$0^{14.19}$,$1^{15.18}$]-5-pentacosene derivatives.

The concrete examples of such componds as mentioned above are illustrated hereunder.

bicyclo [2,2,1]hept-2-en derivatives such as:

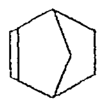

Bicyclo[2,2,1]hept-2-ene

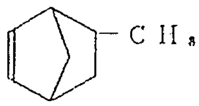

6-Methylbicyclo[2,2,1]hept-ene

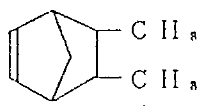

5,6-Dimethylbicyclo[2,2,1]hept-2-ene

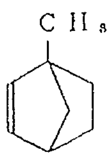

1-Methylbicyclo[2,2,1]hept-2-ene

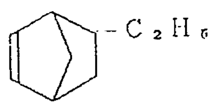

6-Ethylbicyclo[2,2,1]hept-2-ene

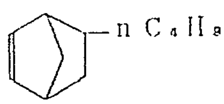

6-Butylbicyclo[2,2,1]hept-2-ene

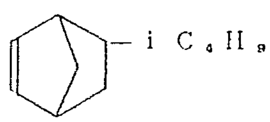

6-Isobutylbicyclo[2,2,1]hept-2-ene

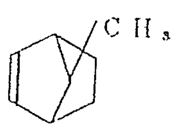

7-Methylbicyclo[2,2,1]hept-2-ene:

tetracyclo[4,4,0,$1^{2.5}$,$1^{7.10}$]-3-dodecene derivatives such as:

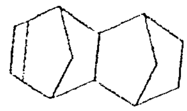

Tetracyclo[4,4,0,$1^{2.5}$,$1^{7.10}$]-3-dodecene

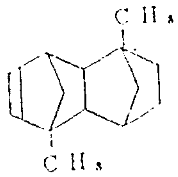

5,10-Dimethyltetracyclo [4,4,0,$1^{2.5}$,$1^{7.10}$]-3-dodecene

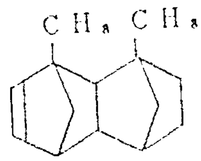

2,10-Dimethyltetracyclo-[4,4,0,$1^{2.5}$,$1^{7.10}$]-3-dodecene

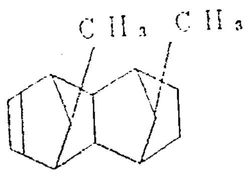

11,12-Dimethyltetracyclo-[4,4,0,$1^{2.5}$,$1^{7.10}$]-3-dodecene

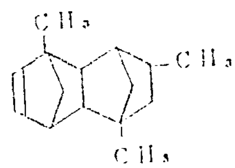

2,7,9-Trimethyltetracyclo-[4,4,0,$1^{2.5}$,$1^{7.10}$]-3-dodecene

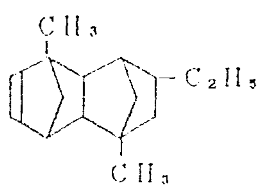

9-Ethyl-2,7-dimethyltetracyclo-[4,4,0,$1^{2.5}$,$1^{7.10}$]-3-dodecene

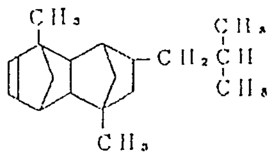

9-Isobutyl-2,7-dimethyltetracyclo-[4,4,0,$1^{2.5}$,$1^{7.10}$]-3-dodecene

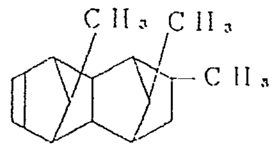

9,11,12-Trimethyltetracyclo-[4,4,0,$1^{2.5}$,$1^{7.10}$]-3-dodecene

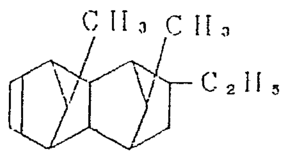

9-Ethyl-11,12-dimethyltetracyclo-[4,4,0,$1^{2.5}$,$1^{7.10}$]-3-dodecene

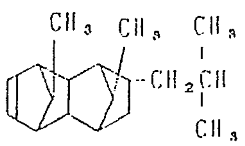

9-Isobutyl-11,12-dimethyltetracyclo-[4,4,0,$1^{2.5}$,$1^{7.10}$]-3-dodecene

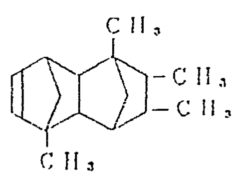

5,8,9,10-Tetramethyltetracyclo-[4,4,0,$1^{2.5}$,$1^{7.10}$]-3-dodecene

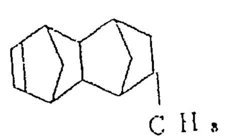

8-Methyltetracyclo[4,4,0,$1^{2.5}$,$1^{7.10}$]-3-dodecene

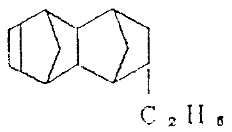

8-Ethyltetracyclo[4,4,0,$1^{2.5}$,$1^{7.10}$]-3-dodecene

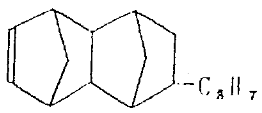

8-Propyltetracyclo[4,4,0,$1^{2.5}$,$1^{7.10}$]-3-dodecene

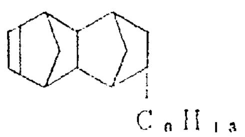

8-Hexyltetracyclo[4,4,0,$1^{2.5}$,$1^{7.10}$]-3-dodecene

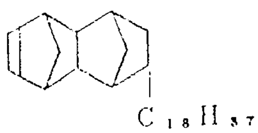

8-Stearyltetracyclo[4,4,0,$1^{2.5}$,$1^{7.10}$]-3-dodecene

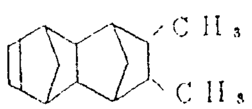

8,9-Dimethyltetracyclo[4,4,0,$1^{2.5}$,$1^{7.10}$]-3-dodecene

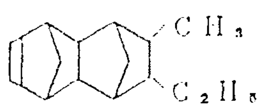

8-Methyl-9-ethyltetracyclo[4,4,0,$1^{2.5}$,$1^{7.10}$]-3-dodecene

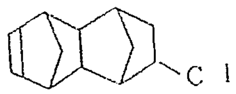

8-Chlorotetracyclo[4,4,0,$1^{2.5}$,$1^{7.10}$]-3-dodecene

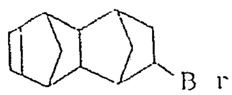

8-Bromotetracyclo[4,4,0,$1^{2.5}$,$1^{7.10}$]-3-dodecene

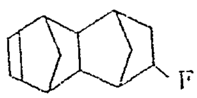

8-Fluorotetracyclo[4,4,0,$1^{2.5}$,$1^{7.10}$]-3-dodecene

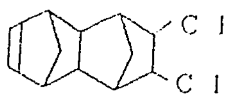

8,9-Dichlorotetracyclo[4,4,0,$1^{2.5}$,$1^{7.10}$]-3-dodecene

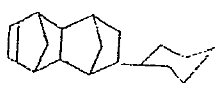

8-Cyclohexyltetracyclo[4,4,0,$1^{2.5}$,$1^{7.10}$]-3-dodecene

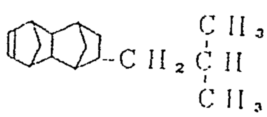

8-Isobutyltetracyclo[4,4,0,$1^{2.5}$,$1^{7.10}$]-3-dodecene

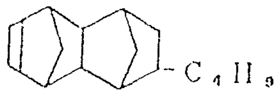

8-Butyltetracyclo[4,4,0,
$1^{2.5}$,$1^{7.10}$]-3-dodecene

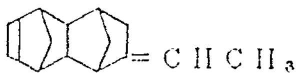

8-Ethylidenetetracyclo[4,4,0,
$1^{2.5}$,$1^{7.10}$]-3-dodecene

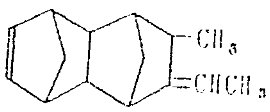

8-Ethylidene-9-methyltetracyclo
[4,4,0,$1^{2.5}$,$1^{7.10}$]-3-dodecene

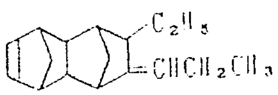

8-n-Propylidene-9- ethyltetracyclo
[4,4,0,$1^{2.5}$,$1^{7.10}$]-3-dodecene

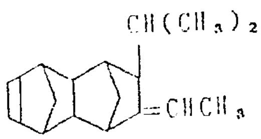

8-Ethylidene-9-isopropyltetracyclo
[4,4,0,$1^{2.5}$,$1^{7.10}$]-3-dodecene

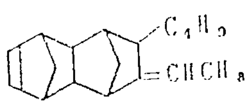

8-Ethylidene-9-butyltetracyclo
[4,4,0,$1^{2.5}$,$1^{7.10}$]-3-dodecene

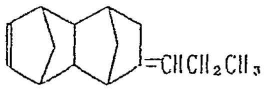

8-n-Propylidenetetracyclo [4,4,0,$1^{2.5}$,$1^{7.10}$]-3-dodecene

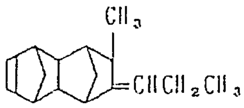

8-n-Propylidene-9-methyltetracyclo [4,4,0,$1^{2.5}$,$1^{7.10}$]-3-dodecene

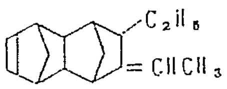

8-Ethylidene-9-ethyltetracyclo [4,4,0,$1^{2.5}$,$1^{7.10}$]-3-dodecene

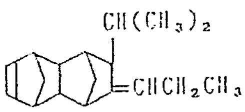

8-n-Propylidene-9-isopropyltetracyclo[4,4,0,$1^{2.5}$,$1^{7.10}$]-3-dodecene

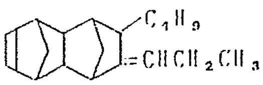

8-n-Propylidene-9-butyltetracyclo [4,4,0,$1^{2.5}$,$1^{7.10}$]-3-dodecene

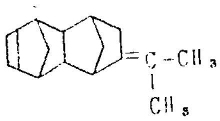

8-Isopropylidenetetracyclo $[4,4,0,1^{2.5},1^{7.10}]$-3-dodecene

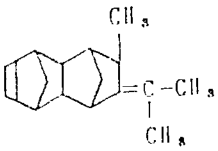

8-Isopropylidene-9-methyltetracyclo $[4,4,0,1^{2.5},1^{7.10}]$-3-dodecene

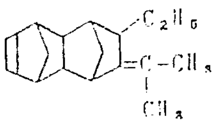

8-Isopropylidene-9-ethyltetracyclo $[4,4,0,1^{2.5},1^{7.10}]$-3-dodecene

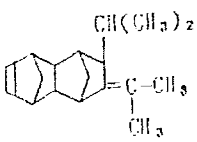

8-Isopropylidene-9-isopropyltetracyclo$[4,4,0,1^{2.5},1^{7.10}]$-3-dodecene

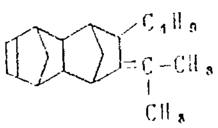

8-Isopropylidene-9-butyltetracyclo $[4,4,0,1^{2.5},1^{7.10}]$-3-dodecene

hexacyclo$[6,6,1,1^{3.6},1^{10.13},0^{2.7},0^{9.14}]$-4-heptadecene derivates such as:

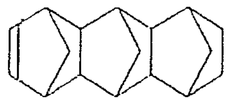

Hexacyclo[6,6,1,$1^{3.6}$,$1^{10.13}$,$0^{2.7}$,$0^{9.14}$]-4-heptadecene

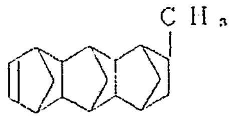

12-Methylhexacyclo[6,6,1,$1^{3.6}$,$1^{10.13}$,$0^{2.7}$,$0^{9.14}$]-4-heptadecene

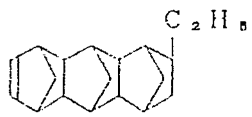

12-Ethylhexacyclo[6,6,1,$1^{3.6}$,$1^{10.13}$,$0^{2.7}$,$0^{9.14}$]-4-heptadecene

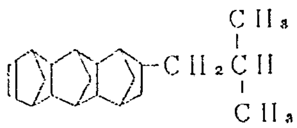

12-Isobutylhexacyclo[6,6,1,$1^{3.6}$,$1^{10.13}$,$0^{2.7}$,$0^{9.14}$]-4-heptadecene

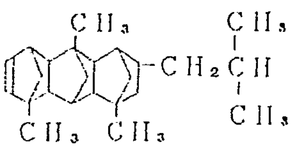

1,6,10-Trimethyl-12-isobutyl-hexacyclo[6,6,1,$1^{3.6}$,$1^{10.13}$,$0^{2.7}$,$0^{9.14}$]-4-heptadecene

Octacyclo[8,8,0,$1^{2.9}$,$1^{4.7}$,1,$^{11.18}$,$1^{13.16}$,$0^{3.8}$,$0^{12.17}$]-5-docosen derivates such as:

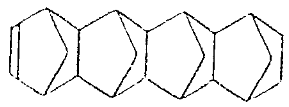

Octacyclo[8,8,0,$1^{2.9}$,$1^{4.7}$,1,$^{11.18}$, $1^{13.16}$,$0^{3.8}$,$0^{12.17}$]-5-docosen

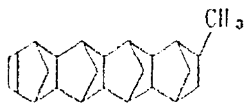

15-Methyloctacyclo[8,8,0,$1^{2.9}$,$1^{4.7}$, 1,$^{11.18}$, $1^{13.16}$,$0^{3.8}$,$0^{12.17}$]-5-docosen

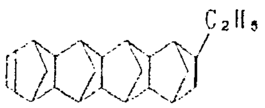

15-Ethyloctacyclo[8,8,0,$1^{2.9}$,$1^{4.7}$, 1,$^{11.18}$, $1^{13.16}$,$0^{3.8}$,$0^{12.17}$]-5-docosen:

pentacyclo[6,6,1,$1^{3.6}$,$0^{2.7}$,$0^{9.14}$]-4-hexadecene derivates such as:

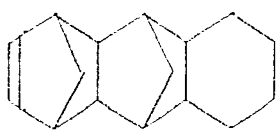

Pentacyclo[6,6,1,$1^{3.6}$,$0^{2.7}$,$0^{9.14}$]-4-hexadecene

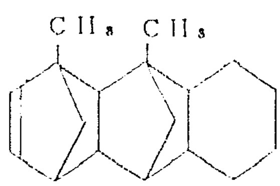

1,3-Dimethylpentacyclo[6,6,1, $1^{3.6}$,$0^{2.7}$,$0^{9.14}$]-4-hexadecene

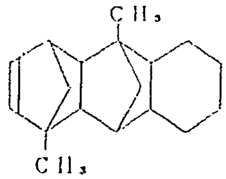

1,6-Dimethylpentacyclo[6,6,1,$1^{3.6}$,$0^{2.7}$,$0^{9.14}$]-4-hexadecene

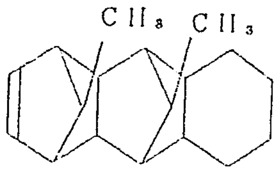

15,16-Dimethylpentacyclo[6,6,1,$1^{3.6}$,$0^{2.7}$,$0^{9.14}$]-4-hexadecene

heptacyclo-5-icosene derivates or heptacyclo-t-henicosene derivates such as:

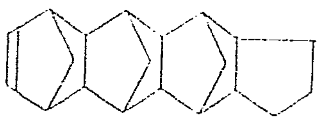

Heptacyclo[8,7,0,$1^{2.9}$,$1^{4.7}$,$1^{11.17}$,$0^{3.8}$,$0^{12.16}$]-5-icosene

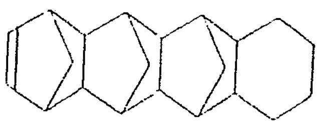

Heptacyclo[8,8,0,$1^{2.9}$,$1^{4.7}$,$1^{11.18}$,$0^{3.8}$,$0^{12.17}$]-5-henicosene

toricyclo[4,3,0,$1^{2.5}$]-3-decene derivatives such as:

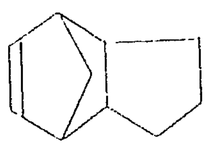

Tricyclo[4,3,0,$1^{2.5}$]-3-decene

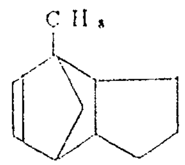

2-Methyl-tricyclo[4,3,0,$1^{2.5}$]-3-decene

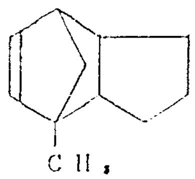

5-Methyl-tricyclo[4,3,0,$1^{2.5}$]-3-decene:

tricyclo[4,4,0,$1^{2.5}$]-3-undecene derivatives such as:

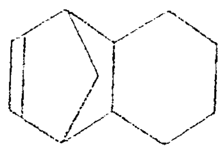

Tricyclo[4,4,0,$1^{2.5}$]-3-undecene

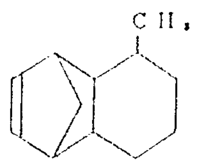

10-Methyl-tricyclo[4,4,0,$1^{2.5}$]-3-undecene:

pentacyclo[6,5,1,$1^{3.6}$, $0^{2.7}$,$0^{9.13}$]-4-pentadecene derivatives such as:

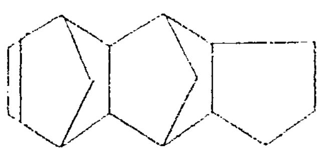

Pentacyclo[6,5,1,$1^{3.6}$, $0^{2.7}$,$0^{9.13}$]-4-pentadecene

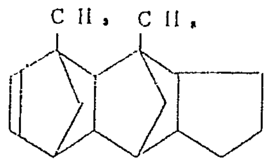

1,3-Dimethylpentacyclo[6,5,1,$1^{3.6}$,$0^{2.7}$,$0^{9.13}$]-4-pentadecene

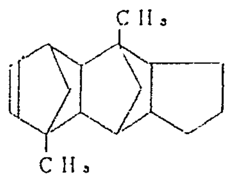

1,6-Dimethylpentacyclo[6,5,1,$1^{3.6}$,$0^{2.7}$,$0^{9.13}$]-4-pentadecene

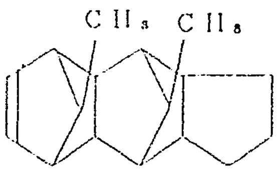

14,15-Dimethylpentacyclo[6,5,1,$1^{3.6}$,$0^{2.7}$,$0^{9.13}$]-4-pentadecene:

diene compounds such as:

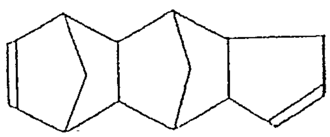

Pentacyclo[6,5,1,$1^{3.6}$,$0^{2.7}$,$0^{9.13}$]-4,10-pentadecadiene:

Pentacyclo[4,7,0,$1^{2.5}$,$0^{8.13}$,$1^{9.12}$]-3-pentadecene derivatives such as:

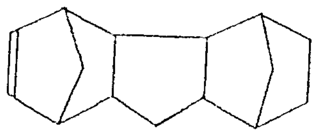

Pentacyclo[4,7,0,$1^{2.5}$,$0^{8.13}$,$1^{9.12}$]-3-pentadecene

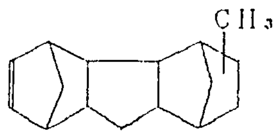

Methyl-substituted pentacyclo [4,7,0,$1^{2.5}$,$0^{8.13}$,$1^{9.12}$]-3-pentadecene

heptacyclo[7,8,0,$1^{3.6}$,$0^{2.7}$,$1^{10.17}$, $0^{11.16}$,$1^{12.15}$]-4-icosene derivatives such as:

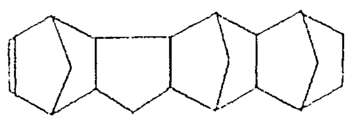

Heptacyclo[7,8,0,$1^{3.6}$,$0^{2.7}$,$1^{10.17}$, $0^{11.16}$,$1^{12.15}$]-4-icosene

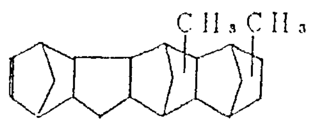

Dimethyl-substituted heptacyclo [7,8,0,$1^{3.6}$,$0^{2.7}$,$1^{10.17}$,$0^{11.16}$,$1^{12.15}$]-4-icosene

nonacyclo[9,10,1,$1^{4.7}$,$0^{3.8}$,$0^{2.10}$,$0^{12.21}$, $1^{13.20}$,$0^{14.19}$,$1^{15.18}$]-5-pentacosene derivatives such as:

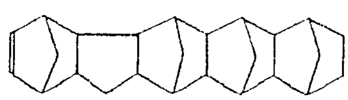

Nonacyclo[9,10,1,$1^{4.7}$,$0^{3.8}$,$0^{2.10}$,$0^{12.21}$, $1^{13.20}$,$0^{14.19}$,$1^{15.18}$]-5-pentacosene

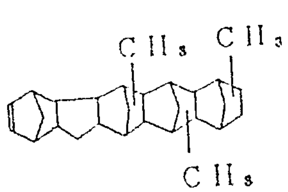

Trimethyl-substituted nonacyclo [9,10,1,$1^{4.7}$,$0^{3.8}$,$0^{2.10}$,$0^{12.21}$,$1^{13.20}$, $0^{14.19}$,$1^{15.18}$]-5-pentacosene

The cycloolefin random copolymers [A] and [B] comprise ethylene units and the above-mentioned cycloolefin units as the essential components as aforesaid, however, if necessary, in addition to these two essential components, said copolymers may contain other copolymerizable unsaturated monomer components so long as they will not throw hinderances in the way of accomplishing the object of the present invention. The unsaturated monomers which may be copolymerized, if necessary, with the copolymers [A] and [B] may include,for example, alpha-olefins having from 3 to 20 carbon atoms such as propylene, 1-butene, 4-methyl-1-pentene, 1-hexene, 1-octene, 1-decene, 1-dodecene, 1-tetradecene, 1-hexadecene, 1-octadecene and 1-eicosene which may be used in an amount of up to an equimolar to the ethylene component unit in the resulting random copolymer.

In the cycloolefin random copolymer [A] having a softening point (TMA) of at least 70° C, the recurring units [a] derived from ethylene are present in an amount of from 40 to 85 mol%, preferably from 50 to 75 mol%, while the recurring units [b] derived from the cycloolefin are present in an amount of from 15 to 60 mol%, preferably from 25 to 50 mol%, and these recurring units [a] and [b] are arranged at random in the substantially linear chain of the copolymer [A]. The molar percentage of the recurring units [a] and [b] were determined by $^{13}C$-NMR. The fact that this cycloolefin random copolymer [A] is completely soluble in decalin at 135° C confirms that it is substantially linear and free from a gel-forming crosslinked structure.

The cycloolefin random copolymer [A] has an intrinsic viscosity [$\eta$] of from 0.05 to 10 dl/g, preferably from 0.08 to 5 dl/g as measured in decalin at 135° C.

The softening temperature (TMA) of the cycloolefin random copolymer [A] as measured by a thermal mechanical analyzer is at least 70° C, preferably from 90 to 250° C, and further preferably from 100 to 200° C. The softening temperature (TMA) referred to above was determined by monitoring thermal deformation behavior of a 1 mm sheet of the copolymer [A] using a thermomechanical analyzer manufactured and sold by Du Pont. More specifically, a quartz needle was vertically placed on the sheet under a load of 49 g and the assembly was heated at a rate of 5° C/min, and a temperature at which the needle penetrated into the sheet by the depth of 0.635 mm was taken as TMA. This cycloolefin random copolymer [A] has a glass transition temperature (Tg) of normally from 500 to 230° C, preferably from 700 to 210° C.

The crystallinity of this cycloolefin random copolymer [A] as measured by X-ray diffractometry is normally from 0 to 10%, preferably from 0 to 7%, and further preferably from 0 to 5%.

In the cycloolefin random copolymer [B] having the above-mentioned softening point (TMA) of less than 70° C, the recurring units [a] derived from ethylene are present in an amount of from 60 to 98 mol%, preferably from 60 to 95 mol%, and the recurring units [b] derived from the cycloolefin are present in an amount of from 2 to 40 mol%, preferably from 5 to 40 mol%, and the recurring units [a] derived from ethylene and the recurring units [b] derived from the cycloolefin are arranged at random in the substantially linear chain of the copolymer [B]. The molar percentage of the recurring units [A] and [B] were determined by $^{13}C$-NMR. The fact that this cycloolefin random copolymer [B] is completely soluble in decalin at 135° C confirms that it is substantially linear and free from a gel-forming crosslinked structure.

The cycloolefin random copolymer [B] as mentioned above has an intrinsic viscosity [$\eta$] of from 0.05 to 5 dl/g, preferably from 0.08 to 3 dl/g as measured in decalin at 135° C.

The softening temperature (TMA) of the cycloolefin random copolymer [B] as measured by a thermal mechanical analyzer is less than 70° C, preferably from -10° to 60° C, and further preferably from 10° to 55° C. This cycloolefin random copolymer [B] has a glass transition temperature (Tg) of normally from -30° to 60° C, preferably from -20° to 50° C.

The crystallinity of this cycloolefin random copolymer [B] as measured by X-ray diffractometry is from 0 to 10%, preferably from 0 to 7%, and further preferably from 0 to 5%.

In the magnetooptical recording media of the present invention, the cycloolefin random copolymer (A]-/the cycloolefin random copolymer [B] weight ratio in the cycloolefin random copolymer composition used for forming the substrate of said recording media is from 100/0.1 to 100/10, preferably from 100/0.3 to 100/7, and further preferably from 100/0.5 to 100/5. By mixing the above-mentioned component [B] with the above-mentioned component [A] in the cycloolefin random copolymer composition, there are obtained such advantages that adhesion between the substrate and the magnetooptical recording film used in the invention under severe conditions is further improved in comparison with the case of the cycloolefin random copolymer composition containing only the component [A], while maintaining excellent transparency and surface smoothness of the substrate itself. Thus, the substrate used in the present invention, which is formed from the above-mentioned cycloolefin random copolymer composition comprising a blend of the above-mentioned components [A] and [B], has such a characteristic feature that excellent adhesion between said substrate and the enhancement film used in the invention will be maintained even after the substrate is allowed to stand under the circumstances of high temperature and humidity.

The cycloolefin copolymers [A] and [B] constituting the cycloolefin random copolymer composition used in the present invention for forming the substrate may all be prepared by the processes proposed by the present inventors in Japanese Patent L-O-P Publns. Nos. 168708/1985, 120816/1986, 115912/1986 and 115916/1986, 252406/1987, 252407/1987, 271308/1986 and 272216/1986, while suitably selecting the

conditions.

The above-mentioned cycloolefin random copolymer composition may be prepared by known methods, for example, a method wherein the cycloolefin random copolymers [A] and [B] are prepared separately and they are blended by means of an extruder to prepare the composition, a so-called solution blending method wherein the copolymers [A] and [B] are individually dissolved thoroughly in an appropriate solvent, for example, saturated hydrocarbon such as heptane, hexane, decane or cyclohexane, or aromatic hydrocarbon such as toluene, benzene or xylene, and the resulting solutions are then blended to prepare the composition, and a method wherein the copolymers [A] and [B] prepared by separate polymerizers are blended in another vessel to prepare the composition.

The cycloolefin copolymer composition thus prepared has an intrinsic viscosity [η] as measured in decalin at 135°C of from 0.05 to 10 dl/g, preferably from 0.08 to 5 dl/g, a softening temperature (TMA) as measured by a thermal mechanical analyzer of from 70 to 250°C, preferably from 80 to 250°C, and further preferably from 100 to 200°C, and a glass transition temperature (Tg) of from 70 to 230°C, preferably from 90° to 210°C.

Furthermore, the substrate of the magnetooptical recording media according to the invention may be made of polymers having recurring units of the general formula [III] resulting from ring opening of the cycloolefin monomers [I], or polymers having recurring units of the general formula [IV] resulting from hydrogenation of the units [III].

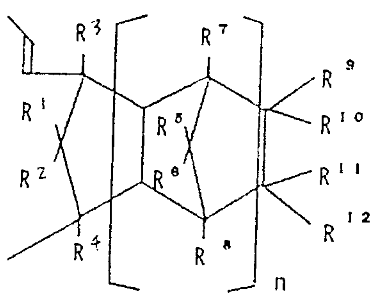

···[III]

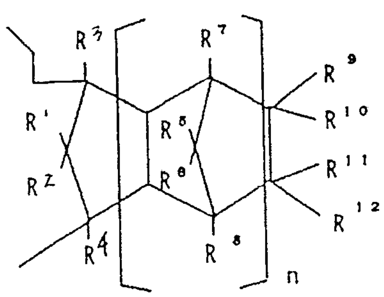

···[IV]

In the general formula [III] or [IV], n and $R^1$ to $R^{12}$ are as defined in the general formula [I].

Though the above-mentioned cycloolefin random copolymer components contains the cycloolefin random copolymer [A] and the cycloolefin random copolymer [B] as the main components, the cycloolefin random copolymer composition of the present invention may be incorporated, if necessary, with a suitable ratio of various additives such as thermal stabilizers, weathering agents, antistatic agents, slip agents, anti-blocking agents, antifoggants, lubricants, dyes, pigments, natural oil, synthetic oil and wax. For example, the stabilizers which may be optionally incorporated include concretely phenolic antioxidants such as tetrakis-[methylene-3-(3,5-di-t-butyl-4-hydroxyphenyl)propionate]methane and β-(3,5-di-t-butyl-4-hydroxyphenyl) propionic acid alkyl ester (particularly preferred are alkyl esters of less than 18 carbon atoms). Phenolic antioxidants such as (2,2′-oxamidobis[ethyl-3-(3,5-di-t-butyl-4-hydroxyphenyl)propionate, etc.; metallic salts of fatty acid such as zinc stearate, calcium stearate, calcium 12-hydroxystearate, etc.; and fatty esters of polyhydric alcohol such as glycerin monostearate, glycerin distearate, pentaerythritol monostearate, pentaerythritol distearate, pentaerythritol tristearate, etc. These compounds may be incorporated into the cycloolefin copolymer or composition thereof either singly or in combination. For example, there may be

used such a combination of tetrakis[methylene-3-(3,5-di-t-butyl-4-hydroxyphenyl)propionate]methane with zinc stearate or glycerin monostearate, and the like combinations.

In the present invention, it is particularly desirable to use phenolic antioxidants in combination with fatty esters of polyhydric alcohol, and the fatty esters are preferably those obtained by esterification of part of the alcoholic hydroxyl groups of polyhydric alcohol of at least three valences.

The fatty esters of polyhydric alcohol used above include concretely fatty esters of glycerin such as glycerin monostearate, glycerin monolaurate, glycerin monomyristate, glycerin monopalmitate, glycerin distearate, glycerin dilaurate, etc., and fatty esters of pentaerythritol such as pentaerythritol monostearate, pentaerythritol monolaurate, pentaerythritol distearate, pentaerythritol dilaurate, pentaerythritol tristearate, etc.

The phenolic antioxidants are used in an amount, based on 100 parts by weight of the cycloolefin random copolymer composition, of from 0.01 to 10 parts by weight, preferably from 0.05 to 3 parts by weight, and further preferably from 0.1 to 1 part by weight, and the fatty esters of polyhydric alcohol are used in an amount, based on 100 parts by weight of said composition, of from 0.01 to 10 parts by weight, preferably from 0.05 to 3 parts by weight.

In the present invention, the above-mentioned cycloolefin random copolymer composition are used for forming the substrate 2. This cycloolefin random copolymer or composition has water absorption lower than that of polycarbonate or poly methyl methacrylate hitherto used as the substrate 2, and hence the magnetooptical recording film 3 formed on said substrate is less oxidized by the water content in the substrate. The substrate 2 formed from this cycloolefin copolymer composition is excellent in adhesion to the magnetooptical recording film 3 and enhancement film 4 especially composed of $Si_3N_4$ or SiNx ($0<x<4/3$), and from this fact, oxidation of the magnetooptical recording film 3 formed on the substrate 2 may effectively inhibited. Accordingly, the magnetooptical recording media 1 comprising the magnetooptical recording film 3 laminated on the substrate 2 is excellent in serviceability as well as in long-term stability.

The substrate 2 formed from the above-mentioned cycloolefin random copolymer or composition thereof is small in double refraction and accordingly high in sensitivity at the time of read-out of the magnetooptical recording film 3, and a non-differential driving device may be used at the time of read-out.

In the magnetooptical recording media 1 of the present invention, amorphous metal alloy films laminated directly or indirectly on the substrate 2 as the magnetooptical recording flim 3, said films having an easy axis of magnetization perpendicular to the film and containing, for example, (i) at least one element selected from 3d transition metals and (iii) at least one element selected from rare earth elements, preferably containing (i) at least one element selected from 3d transition metals, (ii) a corrosion resistant metal and (iii) at least one element selected from rare earth elements.

The magnetooptical recording film 3 containing (i), (ii) and (iii) mentioned above is illustrated hereinafter.

(i) The 3d transition metal used includes Fe, Co, Ti, V, Cr, Mn, Ni, Cu, Zn and the like. Of these preferred are Fe or Co, or both.

This 3d transition metal is present in the magnetooptical recording film 3 in an amount of preferably from 20 to 90 atom%, more preferably from 30 to 85 atom%, and further preferably from 35 to 80 atom%.

(ii) The corrosion resistant metal contained in the magnetooptical recording film 3 is capable of improving said recording film in oxidation resistance. The corrosion resistant metal used includes Pt, Pd, Ti, Zr, Ta, Nb, Mo, Hf and the like. Of these, preferred are Pt, Pd and Ti, and particularly Pt or Pd, or both.

The corrosion resistant metal is present in the recording film 3 in an amount of preferably from 5 to 30 atom%, more preferably from 5 to 25 atom%, particularly from 10 to 25 atom%, and further preferably from 10 to 20 atom%.

With less than 5 atom% of the corrosion resistant metal, the resistance of the resulting magnetooptical recording film to oxidation is not appreciably improved, and thus the coercive force Hc of the film tends to greatly change with time, or the Kerr-rotation angle $\theta$ k tends to decrease. On the other hand, if the content of the corrosion resistant metal of the magnetooptical recording media is in excess of 30 atom%, the Curie point of the resulting amorphous alloy film tends to be reduced and it becomes often lower than ambient temperature.

The magnetooptical recording film 3 is preferably composed of at least one rare earth element (iii) selected from the following group of the elements in addition to the foregoing components (i) and (ii).

The group consists of Gd, Tb, Dy, Ho, Er, Tm, Yb, Lu, La, Ce, Pr, Nd, Pm, Sm and Eu.

Of these elements mentioned above, preferred are Gd, Tb, Dy, Ho, Nd,Sm and Pr.

At least one rare earth element selected from the abovementioned group is present in the recording film 3 in an amount of preferably from 5 to 50 atom%, more preferably from 8 to 45 atom%, and further preferably from 10 to 40 atom%.

In the present invention, the magnetooptical recording film 3 is particularly desirable to have the

composition as will be mentioned below.

(i) 3d Transition metal

In the magnetooptical recording film 3 recommended herein, Fe or Co or both are contained, and Fe and/or Co is preferably present in the magnetooptical recording film in an amount of at least 40 atom% but not more than 80 atom%, preferably at least 40 atom% but less than 75 atom%, and more preferably at least 40 atom% but not more than 59 atom%.

Further, Fe and/or Co present in the magnetooptical recording film is preferably in such an amount that the Co/(Fe + Co) ratio by atom (atomic ratio) is from 0 to 0.3, preferably from 0 to 0.2, and more preferably from 0.01 to 0.2.

When the amount of Fe and/or Co is in the range of at least 40 atom% but not more than 80 atom%, there is such an advantage that a magnetooptical recording film which is excellent in resistance to oxidation and has an easy axis of magnetization perpendicular to the film is obtained.

In this connection, when Co is incorporated into a magnetooptical recording film, there are observed such phenomena as [A] the Curie point of the magnetooptical recording film increases and [B] the Kerr-rotation angle ($\theta$ k) becomes large. As the result, the recording sensitivity of the magnetooptical recording film can be adjusted by the amount of Co to be incorporated and, moreover, a carrier level of reproduced signal increases by incorporating Co. In the preferred magnetooptical recording film, the Co/(Fe + Co) ratio by atom is from 0 to 0.3, preferably from 0 to 0.2, and more preferably from 0.01 to 0.2.

Fig. 5 shows a relationship between the Co/(Fe + Co) ratio by atom (atomic ratio) and the noise level in dBm on a magnetooptical recording film of PtTbFeCo series, and Fig. 6 shows a relationship between the Co/(Fe + Co) ratio by atom (atomic ratio) and the noise level in dBm on a magnetooptical recording film of PdTbFeCo series.

As shown in Fig. 5, in a case of a magnetooptical recording film having a composition represented by $Pt_{13}Tb_{28}Fe_{50}Co_{9}$, as recommended herein, in which the Co/(Fe + Co) ratio by atom is 0.15, the noise level is -56 dBm, whereas in a case of a magnetooptical recording film having a composition represented by $Pt_{13}Tb_{28}Fe_{36}Co_{23}$, in which the Co/(Fe + Co) ratio by atom is 0.39, the noise level is -50 dBm. It is understood from the fact that when the above-mentioned ratio by atom increases the noise level tends to increase. Further, as shown in Fig. 6, in a case of a magnetooptical recording film having a composition represented by $Pd_{14}Tb_{27}F_{52}Co_{7}$, as recommended herein, in which the Co/(Fe + Co) ratio by atom is 0.12, the noise level is -56 dBm, whereas in a case of a magnetooptical recording film having a composition represented by $Pd_{14}Tb_{27}F_{41}Co_{18}$, in which the Co/(Fe + Co) ratio by atom is 0.31, the noise level is -51 dBm. It is understood from the fact that when the above-mentioned ratio by atom increases the noise level also tends to increase in this case.

Fig. 7 shows a relationship between the erasion deterioration in terms of ΔC/N ratio in dB and the Co/(Fe + Co) ratio by atom (atomic ratio) on two series of magnetooptical recording films, one of the composition of PtTbFeCo and the other of the composition of PdTbFeCo.

Specifically, even when a magnetooptical recording film having a composition represented by $Pt_{13}T_{28}Fe_{50}Co_{9}$, as recommended herein, in which the Co/(Fe + Co) ratio by atom is 0.155, has been irradiated with an increased energy at the time of erasing the information once recorded therein, no change in film properties occurs, and new information can be recorded on the erased recording film with the same C/N value as that prior to the erasion.

Furthermore, with a magnetooptical recording film recommended herein no change in film property will occur even when recording and erasing information are repeatedly performed. For instance, no decrease in C/N ratio is observed even when the recording and erasing operations are performed 100,000 times in a magnetooptical recording film having the composition of $Pt_{13}Tb_{28}Fe_{50}Co_{9}$.

(ii) Corrosion resistant metal

Preferred magnetooptical recording films 3 contain at least one of Pt, Pd, Ti, Zr, Ta, Nb and Mo, preferably Pt or Pd, or both, as a corrosion resistant metal, and the amount of Pt and/or Pd contained in the preferred magnetooptical recording films is from 5 to 30 atom%, preferably more than 10 atom% but not more than 30 atom%, more preferably more than 10 atom% but less than 20 atom%, and the most

preferably at least 11 atom% but not more than 19 atom%.

The presence in the magnetooptical recording film of Pt and/or Pd in an amount of at least 5 atom%, particularly in excess of 10 atom% brings about such advantages that resistance to oxidation of said recording film becomes excellent, and even when it is used for a prolonged period of time, no pit corrosion occurs and the C/N ratio does not become low. Similar advantages are also observed in Ti, Mo, Zr, Ta and Nb.

Fig. 8 shows a relationship between the content of Pt or Pd in the magnetooptical recording film containing Pt or Pd and the decrease of the C/N ratio when said recording film is retained for 1000 hours under the circumstances of 85% RH and 80°C, in the case where the cycloolefin random copolymer composition is used for the substrate.

It is thus understood from Fig. 8 that when the amount in the magnetooptical recording film of Pt or Pd is at least 5 atom%, in particular more than 10 atom%, resistance to oxidation of said recording film improves, no pit corrosion occurs even after a long-term use and also the C/N ratio will not deteriorate.

For instance, a magnetooptical recording film having a composition represented by $Pt_{13}Tb_{28}Fe_{50}Co_9$ or $Pd_{12}Tb_{28}Fe_{53}Co_7$ will not change in the C/H ratio at all even when it is retained under the circumstance of 85% RH and 80°C for 1000 hours. In contrast thereto, a magnetooptical recording film having a composition represented by $Tb_{25}Fe_{68}Co_7$ containing no Pt or Pd will greatly decrease in the C/N ratio when it is retained for 1000 hours under the circumstances of 85% RH and 80°C.

By incorporation into a magnetooptical recording film of at lease one element selected form Pt, Pd, Ti, Zr, Ta, Nb and Mo in an amount within the range as specified above, a sufficiently high CIN ratio can be obtained even by a small bias magnetic field when information is recorded on the magnetooptical recording film or when the information recorded is read out therefrom. If a sufficiently high C/N ratio is obtained by a small bias magnetic field, a magnet for producing a bias magnetic field can be made small in size and, moreover, heat generation from the magnet can be inhibited and hence simplification of a driving device for an optical disc bearing the magnetooptical recording film thereon is made possible. Moreover, because a sufficiently large C/N ratio is obtained by a small bias magnetic field, it becomes easy to design a magnet for magnetic field modulation recording capable of overwrite.

Fig. 9 shows a relationship between the bias magnetic field and the C/N ratio (dB) of a magnetooptical recording film having a recommended composition of $Pt_{13}Tb_{28}Fe_{50}Co_9$ and of a magnetooptical recording film having a composition represented by $Tb_{25}Fe_{68}Co_7$.

It is understood from Fig. 9 that in the conventionally known magnetooptical recording film represented by $Tb_{25}Fe_{68}Co_9$, the C/N ratio is not saturated unless a bias magnetic field of more than 250 Oe is applied, whereas in the magnetooptical recording film recommended herein, represented by $Pt_{13}T_{28}Fe_{50}Co_9$, recording can be performed even by a small bias magnetic field and the C/N ratio is saturated at a level of 120 Oe or more. In the following examples and comparative examples, a Hsat value of the minimum bias magnetic field of each magnetooptical recording film is shown, at which the C/N ratio is saturated. The smaller is this Hsat value, it follows that the C/N ratio is saturated by a small bias magnetic field.

Fig. 10 shows a relationship between the content of Pt or Pd and the minimum bias magnetic field (Hsat, (Oe)) on a magnetooptical recording film of PtTbFeCo series and on a magnetooptical recording film of PdTbFeCo series.

It is understood from Fig. 10 that the minimum bias magnetic field Hsat, becomes sufficiently small when the content of Pt and/or Pd exceeds 10 atom%.

(iii) Rare earth element (RE)

In the magnetooptical recording film 3, at least one rare earth element (RE) is contained, and usable as the rare earth element is Nd, Sm, Pr, Ce, Eu, Gd, Tb, Dy and Ho, alone or in combination.

Of the rare earth elements illustrated above, preferably usable are Nd, Pr, Gd, Tb and Dy, and particularly preferred is Tb. The rare earth elements may be used in combination of two or more, and in this case the combination preferably contains at least 50 atom% of Tb.

From the standpoint of obtaining an optical magnetism having an easy axis of magnetization perpendicular to the film, it is preferable that this rare earth element is present in a magnetooptical recording film in such an amount as $0.15 \leqq x \leqq 0.45$, preferably $0.20 \leqq x \leqq 0.4$, wherein x represents RE/(RE + Fe + Co) [atomic ratio].

In the present invention, it is also possible to improve Curie temperature, compensation temperature, coercive force Hc or Kerr-rotation angle $\theta$ k, or cheapen the cost of production by incorporating various

elements into the magnetooptical recording films. These elements for the purpose intended may be used, for example, in the proportion of less than 10 atom% based on the total number of atoms of elements constituting the recording film.

Examples of useful elements for this purpose other than those constituents of the magnetooptical recording film include such elements as mentioned below.

(I) 3d transition elements other than Fe and Co

Concretely, such transition elements include Sc, Ti, V, Cr, Mn, Ni, Cu and Zn.

Of these elements exemplified above, preferably used are Ti, Hi, Cu and Zn.

(II) 4d transition elements other than Pd

Concretely, such transition elements include Y, Zr, Nb, Mo, Tc, Ru, Rh, Ag and Cd.

Of these transition elements exemplified above, preferably used are Zr and Nb.

(III) 5d transition elements other than Pt

Concretely, such transition elements include Hf, Ta, W, Re, Os, Ir, Au and Hg. Of these transition elements, preferably used is Ta, Hf.

(IV) Group IIIB elements

Concretely, B, Al, Ga, In, and Tl are used.

Of these elements, preferably used are B, Al and Ga.

(V) Group IV B elements

Concretely, C, Si, Ge, Sn and Pb are used.

Of these elements, preferably used are Si, Ge, Sn and Pb.

(VI) Group V B elements

Concretely, N, P, As, Sb and Bi are used.

Of these elements, preferably used is Sb.

(VII) Group VI B elements

Concretely, S, Se, le and Po are used.

Of these elements, preferably used is Te.

In the present invention, furthermore, magnetooptical recording films composed of (i) at least one member selected from 3d transition metals and (iii) at least one element selected from rare earth elements mentioned above. Such magnetooptical recording films are preferably those of TbFeCo series, wherein preferably the amount of Tb is from 10 to 40 atom%, that of Fe is from 30 to 90 atom% and that of Co is from 0 to 30 atom%. In the present invention, magnetooptical recording films, they contain (i) a 3d transition metal and (iii) a rare earth element as mentioned above, may further contain other elements (e.g. elements of (I) - (VII) mentioned above) and may also be used as the magnetooptical recording film 3.

It has been confirmed by broad angle X-ray diffractometry that the magnetooptical recording films 3 having a composition described above have an easy axis of magnetization perpendicular to the film plane and that many of them may be an amorphous thin film which exhibits a Kerr hysteresis of a good angular loop, indicating that it is perpendicularly magnetizable and capable of magnetooptical recording.

By the term "Kerr hysteresis of a good angular loop" used herein we mean that the ratio $\theta k_2/\theta k_1$ is at least 0.8 wherein $\theta k_1$ is a saturated Kerr-rotation angle that is a Kerr-rotation angle where the external magnetic field is maximum, and $\theta k_2$ is a residual Kerr-rotation angle that is a Kerr-rotation angle where the external magnetic field is zero.

The thickness of the magnetooptical recording film 3 is from 100 to 50000 Å, Preferably from 100 to 3000 Å, and further preferably about from 150 to 2000Å.

## Reflection film

In the magnetooptical recording media of the present invention, the reflection film 4 may be formed on the magnetooptical recording film 3. The reflection film 4 is preferably composed of a metal or alloy having a thermal conductivity of not higher than 2 J/cm•sec•k, preferably not higher than 1 J/cm•sec•K.

Further preferably, the reflection film 4 is composed of a metal or alloy having a reflectivity of at least 50%, preferably at least 70%, and a thermal conductivity of not higher than 2 J/cm•sec•K, preferably not higher than 1 J/cm•sec•K.

Specifically, the reflection film 4 is composed of Pt having a thermal conductivity of 0.71 J/cm•sec•K, Pd having a thermal conductivity of 0.76 J/cm•sec•K, Ti having a thermal conductivity of 0.22 J/cm•sec•K, Co having a thermal conductivity of 0.99 J/cm•sec•K, Zr having a thermal conductivity of 0.23 J/cm•sec•K

or alloys thereof. In the present invention, however, it is desirable to use the reflection film 4 composed of nickel alloy having a refractive index of at least 50%, preferably at least 70%, and a thermal conductivity of not higher than 2 J/cm•sec•K, preferably not higher than 1 J/cm•sec•K.

Suitable nickel alloys for constituting the reflection film 4 preferably comprise nickel as the primary component and at least one alloying metal selected from the group consisting of silicon, molybdenum, iron, chromium and copper. Such nickel alloys contain nickel in an amount of from 30 to 99 atom%, preferably from 50 to 90 atom%.

Examples of the nickel alloys usable herein to constitute the reflection film include, for example.

Ni-Cr alloys (for example, an alloy of from 30 to 99 atom% of Ni and from 1 to 70 atom% of Cr, preferably an alloy of from 70 to 95 atom% of Ni and from 5 to 30 atom% of Cr),

Ni-Si alloys (for example, an alloy of 85 atom% of Ni, 10 atom% of Si, 3 atom% of Cu and 2 atom% of Al).

Ni-Cu alloys (for example, an alloy of 63 atom% of Ni, from 29 to 30 atom% of Cu, from 0.9 to 2 atom% of Fe, from 0.1 to 4 atom% of Si and from 0 to 2.75 atom% of Al).

Ni-Mo-Fe alloys (for example, an alloy of from 60 to 65 atom% of Ni, from 25 to 35 atom% of Mo and 5 atom% of Fe.),

Ni-Mo-Fe-Cr alloys (for example, an alloy of from 55 to 60 atom% of Ni, from 15 to 20 tom% of Mo, 6 atom% of Fe, from 12 to 16 atom% of Cr, and 5 atom% of W.),

Ni-Mo-Fe-Cr-Cu alloys (for example, an alloy of 60 atom% of Hi, 5 atom% of Mo, 8 atom% of Fe, 21 atom% of Cr, 3 atom% of Cu, 1 atom% of Si, 1 atom% of Mn, and 1 atom% of W; and an alloy of from 44 to 47 atom% of Ni, from 5.5 to 7.5 atom% of Mo, from 21 to 23 atom% of Cr, 0.15 atom% of Cu, 1 atom% of Si, from 1 to 2 atom% of Mn, 2.5 atom% of Co, 1 atom% of W, from 1.7 to 2.5 atom% of Nb, and a balance of Fe),

Ni-Cr-Cu-Mo alloys (for example, an alloy of from 56 to 57 atom% of Ni, from 23 to 24 atom% of Cr, 8 atom% of Cu, 4 atom% of Mo, 2 atom% of W, and 1 atom% of Si or Mn),

Ni-Cr-Fe alloys (for example, an alloy of 79.5 atom% of Ni, 13 atom% of Cu, 6.5 atom% of Fe and 0.2 atom% of Cu; and an alloy of from 30 to 34 atom% of Ni, from 19 to 22 atom% of Cr, 0.5 atom% of Cu, 1 atom% of Si, 1.5 atom% of Mn and a balance of Fe),

Further, the reflection film 4 proposed herein serves to enhance the resistance to oxidation of the magnetooptical recording film, and thus, provides a magnetooptical recording media capable of maintaining an excellent reliability for a prolonged period of time.

Preferred reflection films 4 comprise a nickel alloy having a thermal conductivity of not higher than 2 J/cm•sec•K, preferably not higher than 1 J/cm•sec•K, particularly preferred from the view point of a high C/N ratio, are reflection films composed of a Ni-Cr alloy comprising from 30 to 99 atom% of Ni and from 1 to 70 atom% of Cr, in particular from 70 to 95 atom% of Ni and from 5 to 30 atom% of Cr.

When a reflection film 4 composed of a metal or alloy, in particular a nickel alloy having a reduced thermal conductivity and an increased reflectance, is used according to the invention, a large Kerr-rotation angle and a higher reflectance can be realized even with a thinner magnetooptical recording film.

The thickness of the reflection film 4 is normally from 100 to 4000 Å, preferably from about 200 to about 2000 Å.

The total thickness of the magnetooptical recording film 3 and the reflection film 4 is normally from 300 to 4600 Å, preferably from about 350 to about 2400 Å.

The magnetooptical recording media 1 of the present invention may have an enhancing film 5 between the substrate 2 and the magnetooptical recording film 3. They may also have an enhancing film 5 between the magnetooptical recording film 3 and the reflection film 4. The enhancing film 5 increases the sensitivity of the magnetooptical recording media 1, and also acts as a protective film the magnetooptical recording film 3 thereof. The enhancing film 5 can be used so long as it has a refractive index higher than that of the substrate and its is transparent.

The following materials may be mentioned as typical representative of the enhancing film for the magnetooptical recording media due to their good adhesion to the substrate and long-term stability of the magnetooptical recording characteristics thereof: ZnS, ZnSe, CdS, $Si_3N_4$, SiNx ($0<x<4/3$), Si and AlN. The thickness of the enhancing film is 100 to 2000 Å, and prefereably about 300 to 1500 Å. In view of the crack formation resistance of the enhancing film, $Si_3N_4$ and SiNx ($0<x<4/3$) are particularly preferred materials therefor.

A process for preparing the first magnetooptical recording media according to the present invention is illustrated hereinafter.

The first magnetooptical recording media may be prepared by depositing an amorphous alloy film having their predetermined compositions on a substrate by a known sputtering process or electron beam

deposition process, wherein the substrate is maintained at about room temperature (this substrate may be either fixed to or may be rotated), and use is made of a composite target with chips of elements constituting the amorphous alloy film in the predetermined proportions or an alloy target having the predetermined composition, and a reflection film is then formed, if necessary, on the thus formed magnetooptical recording film by the similar procedure.

The magnetooptical recording media as illustrated above may be prepared at room temperature, and the magnetooptical recording film as formed is not always in need of such a heat treatment as annealing for the purpose of allowing said film to have an easy axis of magnetization perpendicular to the film.

If necessary, in the connection, an amorphous alloy film can also be formed on a substrate while heating the substrate to from 50 to 100 °C or while cooling the substrate to -50 °C.

At the time of sputtering, moreover, biasing a substrate is also possible so that the substrate comes to have a negative potential. By doing so, ions of an inert gas such as argon accelerated in the electric field will hit not only target substances but also a magnetooptical recording film being formed and consequently a magnetooptical recording film having further enhanced characteristics may be frequently obtained.

## EFFECTS OF THE INVENTION

In the magnetooptical recording media of the present invention, adhesion between the substrate and the magnetooptical recording film is excellent, and oxidation resistance and long-term stability of magnetooptical recording characteristics are also excellent, because said media is composed of a substrate of a cycloolefin random copolymer composition comprising ethylene and cycloolefin and a magnetooptical recording film consisting of an amorphous alloy film laminated thereon.

Various physical properties indicated in the examples were measured or evaluated according to the following procedure.

The present invention is illustrated below with reference to examples, but it should be construed that the invention is in no way limited to those examples.

(1) The composition of the recordig films obtained was determined by ICP emission spectroscopic analysis.

(2) The Kerr-rotation angle was measured by the inclination incidence method ($\lambda$ = 780 nm) at a remanent magnetization in the external magnetic field of zero from the side of teh glass substrate. A concrete method of measurement and apparatus therefor to be employed in the inclination incidence method are described in "Measuring Techniques of Magnetic Materials", compiled by Kazuo Yamakawa (published by Torikepps K.K. on December 15, 1985), pp261-263.

(3) The magnetooptical disc obtained had a diameter of 130 mm, and using this magnetooptical disc, recording and reproducing were carried out with a driving apparatus (Nakamichi OMS-1000) under the conditions of recording frequency number 1 MHZ (Duty ratio 50%), linear speed of 11.1 m/s, bias magnetic field of 200 Oe at the time of writing, and readoiut laser power of 1.0 mW.

(4) Table 1 also shows a carrier to noise ratio (C/N ratio) and noise level when teh recording was carried out with a recording power (optimum recording power), of which a level of second harmonic frequency as measured by spectrum analyzer became minimum.

(5) Then, the information recorded was erased with a power larger by 3.0 mW than this optimum recording power, and a new information was recorded on the erased recording film. This operation was repeated 10 times, and thereafter the difference between C/N ratio before and after erasion was measured and represented as ΔC/N ratio.

(6) As regards bias magnetic field dependability, thebias magnetic field dependability (H sat) was obtained by a change in C/N ratio when the bias magnetic field under the above-mentioned conditions was changed upto 50-500 Oe.

(7) Further, with the purpose of long-term reliability, the ratio obtianed was subjected to life test, wherein the disc was allowed to stand in an oven under the circumstances of high temperature and humidity of 80 °C and 85% RH, and after the lapse of 1000 hours, C/N ratio was measured to obtain the results as shown in Table 1.

### Referential Example 1

Preparation of substrate composed of cycloolefin random copolymer composition

(i) Polymerization Example 1

Preparation of copolymer [A] having a softening temperature of not lower than 70 °C.

With a 2-litre glass polymerization reactor equipped with a stirring blade, there was carried out continuously a copolymerization reaction between ethylene and tetracyclo $[4,4,0,1^{2.5},1^{7.10}]$-3-dodecene (1,4,5,8-dimethano-1,2,3,4,4a,5,8,8a-octahydronaphthalene, structural formula:

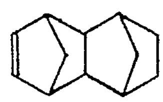

hereinafter abbreviated to DMON). That is, into the polymerization reactor were continuously charged a solution of DMON in cyclohexane so that the DMOH concentration in the polymerization reactor became 60 g/l, a solution of $VO(OC_2H_5)Cl_2$ as a catalyst in cyclohexane so that the vanadium concentration in the polymerization reactor became 0.9 mmol/l, and a solution of ethylaluminum sesquichloride $(Al(C_2H_5)_{1.5}Cl_{1.5})$ in cyclohexane so that the aluminum concentration in the polymerization reactor became 7.2 mmol/l, while continuously withdrawing from the bottom of the polymerization reactor the polymerization liquid so that the volume of the polymerization liquid in the polymerization reactor was constantly 1 litre. Simultaneously, into the polymerization reactor from the top of the polymerization reactor ethylene was fed at a rate of 85 l/hr, hydrogen was fed at a rate of 6 l/hr and nitrogen was fed at a rate of 45 l/hr. The copolymerization reaction was carried out at 10 °C by circulating a refrigerant through a jacket fitted externally to the polymerization reactor.

The copolymerization was carried out under the conditions as illustrated above, whereupon a polymerization reaction mixture containing an ethylene/DMON random copolymer was obtained. The polymerization reaction was stopped by adding a small amount of isopropyl alcohol to the polymerization liquid withdrawn from the bottom of the reactor. Thereafter, the polymerization liquid was poured into a household mixer containing acetone of about three times the volume of the polymerization liquid, while rotating the mixer, thereby depositing the resulting copolymer. The deposited copolymer was collected by filtration, dispersed in acetone so that the polymer concentration became about 50 g/l, and the copolymer was treated at the boiling point of acetone for 2 hours. After the treatment as above, the copolymer was collected by filtration and dried at 120 °C overnight (12 hours) under reduced pressure.

The thus obtained ethylene/DMON random copolymer [A] had an ethylene unit of 59 mol% as measured by $^{13}C$-NMR analysis, and intrinsic viscosity $[\eta]$ of 0.42 dl/g as measured at 135 °C in decalin, and a softening temperature (TMA) of 154 °C.

(ii) Polymerization Example 2

Preparation of copolymer [B] having a softening temperature of below 70 °C

The same copolymerization reaction as in Polymerization Example 1 was carried out except that DMON, $VO(OC_2H_5)Cl_2$ and ethylaluminum sesquichloride were fed into the polymerization reactor so that the concentrations of DMON, $VO(OC_2H_5)Cl_2$ and ethylaluminum sesquichloride in the polymerization reactor became 23 g/l, 0.7 mmol/l and 5.6 mmol/l, respectively, and that ethylene, hydrogen and nitrogen were fed into the polymerization reactor at rates of 140 l/hr, 13 l/hr and 25 l/hr, respectively, and the polymerization temperature was 10 °C. After the completion of the copolymerization, the resulting copolymer was deposited, collected and dried at 180 °C under reduced pressure for 12 hours as in polymerization Example 1.

The thus-obtained ethylene/DMOH copolymer [B] had an ethylene unit of 89 mol% as measured by 13C-NMR analysis, an intrinsic viscosity $[\eta]$ of 0.44 dl/g as measured at 135 °C in decalin and a softening temperature (TMA) of 39 °C.

(iii) Preparation of cycloolefin random copolymer composition and a substrate thereof

In 8 litres of cyclohexane were poured 400 g of the copolymer [A] obtained in Polymerization Example 1 and 4 g of the copolymer [B] obtained in Polymerization Example 2 (weight ratio: [A]/[B] = 100/1), and dissolved at about 50 °C while thoroughly stirring to obtain a homogeneous solution. The thus obtained homogeneous solution was poured in 24 litres of acetone to deposit an [A]/[B] blend. The thus obtained blend was dried at 120 °C under reduced pressure overnight.

The [A]/[B] blend thus obtained was incorporated with 0.5% of tetrakis-[methylene-3-(3,5-di-t-butyl-4-hydroxylphenyl) propionate] methane, 0.05% of zinc stearate and 0.5% of glycerin monostearate as stabilizers, each amount being based on the total weight of the copolymers [A] and [B]. The resulting blend was pelletized at 23 °C by using a 20 mmØ extruder (L/D = 20) and molded into an optical disc substrate by using a injection molding machine (Trade name IS-50, manufactured by TOSHIBA KIKAI LTD.), the substrate obtained if of 130 mmØ and 1 mm in thickness and both surfaces thereof are specular.

Example 1

The disc substrate (130 mmØ) (hereinafter referred to as PO substrate) composed of the cycloolefin random copolymer composition obtained in Referential Example 1 was subjected to ultrasonic washing with Fleon TE without drying and then used. On the disc substrate obtained, using a composiie target with chips of Pt and Tb in a predetermined proportion on Fe-Co target as a target, there was deposited on said enhancement layer according to magnetron sputtering process at from 20 to 50 °C a magnetooptical recording film of $Pt_{12}Tb_{30}Fe_{49}Co_9$ having a thickness of 1000 Å as a magnetooptical recording layer under the conditions of the ultimate degree of vacuum of not more than 1.0 X $10^{-7}$ Torr in an Ar atmosphere.

As a result of determination by the wide angle X-ray diffraction method, the magnetooptical recording film obtained was amorphous. The composition of the film was determined by ICP emission spectroscopic analysis.

The physical properties of the magnetooptical recording media (film) is shown in Table 1.

The thus obtained 130 mmØ disc having the films was left to stand in an air-conditioning equipment at 85 °C and 85% RH for 170 hours. After this test, the appearance of the recording film was inspected microscopically. It was found that no change in the appearance of the recording film was caused in comparison with the film before the test and the adhesion of the film was good.

Example 2

The procedure of Example 1 was repeated using the same PO substrate and a composite target with chips of Tb in a predetermined proportion on Fe-Co target as target, thus a magnetooptical recording film of $Tb_{25}Fe_{68}Co_7$ having a thickness of 1000Å was formed.

The magnetooptical recording film obtained was amorphous.

The physical properties of the magnetooptical recording media (film) is shown in Table 2. And the film condition inspected by microscopy was good.

The thus obtained 130 mmØ disc with the film was allowed to stand in an air-conditioning equipment at 85 °C and 85% RH for 170 hours. After this test, the appearance of the recording film was inspected microscopically. It was found that no change in the appearance of the recording film was caused in comparison with the film before the test and the adhesion of the film was good.

Comparative Example 1

A disc substrate composed of a polycarbonate resin (PC) was subjected to a drying treatment at 80 °C in a sputtering device, evacuated overnight and then using a composite target with chips of Pt and Tb in a predetermined proportion on Fe-Co target as a target, there were deposited by DC magnetron sputtering process a magnetooptical recording film comprising $Pt_{12}Tb_{30}Fe_{49}Co_9$ having a thickness of 1000Å as a magnetooptical recording layer under the condition of the ultimate degree of vacuum of not more than 1.0 X $10^{-7}$ Torr in an Ar atmosphere.

As a result of determination by the wide angle X-ray diffraction method, the magnetooptical recording film was amorphous. The composition of the recording film was determined by ICP emission spectroscopic

analysis.

Comparative Example 2

The procedure of Comparative Example 1 was repeated using adisc substrate composed of a polycarbonate resin and a composite target with chips of Tb in a predetermined proportion on Fe-Co target as target thus a magnetooptical recording film of $Tb_{25}F_{68}Co_7$ having a thickness of 1000Å was formed.

As a result of determination by the wide angle X-ray diffraction method, the magnetooptical recording film obtained was amorphous.

Evaluation of the adhesion between the substrate and the magnetooptical recording film

The evaluation of the adhesion between the substrate and the magnetooptical recording film of each of the discs obtained in Examples 1 and 2, and Comparative Examples 1 and 2 was made in the following manner.

The results are shown in Table 1.

Adhesion test

Cross-cut adhesive test (JIS-K5400)

On the recording layer as a sample, 11 parallel lines at right angles to each other are drawn at 1 mm intervals in each direction of length and width by using a cutter knife. Cuts are made so as to give 100 squares per 1 $cm^3$ in the form of a checkerboard.

Evaluation on peeling is made by using Cellophane tape (a product of Nichiban).

Evaluation

(1) Immediately after the formation of the layer.

(2) After the lapse of 100 hours under the circumstances of 80°C and 85% RH.

Table 1

| | Substrate | Magnetooptical recording films | Cross-cut adhesive test | |
|---|---|---|---|---|
| | | | Immediately after formation of films | 85°C/85%RH, after 100hr. |
| Example 1 | PO | $Pt_{12}Tb_{30}Fe_{49}Co_9$ | 100/100 Not peeled | 100/100 Not peeled |
| Co.Example 1 | PC | $Pt_{12}Tb_{30}Fe_{49}Co_9$ | 0/100 Completely peeled off | 0/100 Completely peeled off |
| Example 2 | PO | $Tb_{25}Fe_{68}Co_7$ | 100/100 Not peeled | 100/100 Not peeled |
| Co.Example 2 | PC | $Tb_{25}Fe_{68}Co_7$ | 0/100 Completely peeled off | 0/100 Completely peeled off |

Examples 3 to 20

The procedure of Example 1 was repeated using a same pO substrtate and the magnetooptical recording film were changed as shown in Table 1. The properties of the thus obtained magnetooptical recording media are shown in Table 2.

TABLE 2

| Composition | | x value | Fe+Co (atom%) | $\frac{Co}{Fe+Co}$ (atom%) | Kerr-rotation angle | coercive force Hc(kØe) | C/N ratio [dB] | Hsat. (Oe) | N[dBm] | Erasion deterioration ΔC/N ratio | After life test C/N ratio(dB) |
|---|---|---|---|---|---|---|---|---|---|---|---|
| EXAMPLE 1 | $Pt_{42}Tb_{30}Fe_{49}Co_9$ | 0.34 | 58 | 0.16 | 0.25 | 2.7 | 51 | 120 | -56 | 0 | 51 |
| EXAMPLE 2 | $Tb_{25}Fe_{68}Co_9$ | 0.25 | 75 | 0.09 | 0.34 | 7.0 | 51 | 260 | -56 | 0 | * |
| EXAMPLE 3 | $Pt_{17}Tb_{30}Fe_{44}Co_9$ | 0.36 | 53 | 0.17 | 0.23 | 2.9 | 50 | 120 | -56 | 0 | 50 |
| EXAMPLE 4 | $Pt_{20}Tb_{30}Fe_{41}Co_9$ | 0.38 | 50 | 0.18 | 0.20 | 3.5 | 48 | 120 | -56 | 0 | 48 |
| EXAMPLE 5 | $Pt_{13}Tb_{26}Fe_{61}$ | 0.30 | 61 | 0 | 0.22 | 3.3 | 48 | 120 | -56 | 0 | 48 |
| EXAMPLE 6 | $Pt_{13}Tb_{27}Fe_{55}Co_5$ | 0.31 | 60 | 0.08 | 0.24 | 5.4 | 49 | 120 | -56 | 0 | 49 |
| EXAMPLE 7 | $Pt_{13}Tb28Fe_{55}Co_5$ | 0.32 | 59 | 0.15 | 0.26 | 8.5 | 50 | 120 | -56 | 0 | 50 |
| EXAMPLE 8 | $Pt_{13}Tb_{27}Fe_{55}Co_5$ | 0.32 | 59 | 0.25 | 0.27 | 7.0 | 50 | 120 | -56 | 0 | 50 |
| EXAMPLE 9 | $Pt_{12}Nd_{10}Tb_{23}Fe_{46}Co_9$ | 0.38 | 55 | 0.16 | 0.24 | 5.0 | 50 | 100 | -56 | 0 | 50 |
| EXAMPLE 10 | $Pt_{12}Pr_8Dy_{26}Fe_{45}Co_9$ | 0.39 | 54 | 0.17 | 0.21 | 3.1 | 48 | 100 | -56 | 0 | 48 |
| EXAMPLE 11 | $Pt_{14}Gd_3Tb_{26}Fe_{52}Co_5$ | 0.34 | 57 | 0.09 | 0.25 | 4.2 | 50 | 120 | -56 | 0 | 50 |
| EXAMPLE 12 | $Pt_{14}Dy_3Tb_{25}Fe_{51}Co_9$ | 0.33 | 58 | 0.12 | 0.24 | 8.6 | 50 | 120 | -56 | 0 | 50 |
| EXAMPLE 13 | $Pt_{12}Dy_{30}Fe_{50}Co_8$ | 0.34 | 58 | 0.14 | 0.22 | 2.0 | 49 | 100 | -56 | 0 | 49 |
| EXAMPLE 14 | $Pd_{11}Tb_{32}Fe_{48}Co_9$ | 0.36 | 57 | 0.16 | 0.32 | 2.6 | 51 | 150 | -56 | 0 | 51 |
| EXAMPLE 15 | $Pd_{12}Tb_{28}Fe_{53}Co_7$ | 0.32 | 60 | 0.12 | 0.31 | 2.3 | 51 | 140 | -56 | 0 | 51 |
| EXAMPLE 16 | $Pd_{14}Tb_{27}Fe_{52}Co_7$ | 0.31 | 59 | 0.12 | 0.31 | 7.2 | 51 | 130 | -56 | 0 | 51 |
| EXAMPLE 17 | $Pd_{16}Tb_{26}Fe_{51}Co_7$ | 0.31 | 58 | 0.12 | 0.30 | 8.0 | 50 | 130 | -56 | 0 | 50 |
| EXAMPLE 18 | $Pd_{18}Tb_{28}Fe_{48}Co_7$ | 0.34 | 54 | 0.11 | 0.28 | 1.9 | 50 | 120 | -56 | 0 | 50 |
| EXAMPLE 19 | $Pd_{20}Tb_{27}Fe_{46}Co_7$ | 0.34 | 53 | 0.13 | 0.24 | 2.5 | 49 | 120 | -56 | 0 | 49 |
| EXAMPLE 20 | $Pd_{24}Tb_{26}Fe_{43}Co_7$ | 0.34 | 50 | 0.14 | 0.21 | 3.9 | 48 | 120 | -56 | 0 | 48 |

Example 21

On the disc substrate composed of the cycloolefin random copolymer composition prepared in Referential Example 1, there were successively formed a film of SiNx (0 < x < 4/3, reflectance n = 2.3, k (attenuation constant) = 0.014) having a thickness of 700Å as an enhancing layer, a film of $Pt_{18}Tb_{34}Fe_{38}Co_{10}$ as a magnetooptical recording film and a film of $Ni_{80}Cr_{20}$ having a thickness of 700Å as a reflection film.

The record reproducing characteristics of the thus-obtained magnetooptical recording media were measured at a recording frequency of 1 MHz (duty ratio 50%) and a linear velocity of 5.4 m/sec. As a result, the optimum recording laser power was 3.5 mW and C/N was 50 dB (reproducing laser power was 1.0 mW).

Examples 22 to 27

The procedure of Example 21 was repeated except that the magnetooptical recording film and the reflective film were changed as shown in Table 2 to obtain magnetooptical recording media. In the same manner as in Example 21, evaluation was made. The results are shown in Table 3.

Table 3

| | Magnetooptical recording films | Refraction film | Optimum recording power | C/N |
|---|---|---|---|---|
| Example 22 | $Pt_{15}Tb_{30}Fe_{49}Co_{8}$ 300Å | $Ni_{85}Cr_{15}$ 800A | 4.0mW | 50dB |
| Example 23 | $Pt_{8}Tb_{28}Fe_{53}Co_{11}$ 400Å | $Ni_{80}Cr_{20}$ 1200A | 5.3mW | 49dB |
| Example 24 | $Pt_{20}Tb_{35}Fe_{25}Co_{20}$ 200Å | $Ni_{64}Cu_{36}$ 200A | 2.8mW | 48dB |
| Example 25 | $Pt_{12}Tb_{30}Fe_{48}Co_{10}$ 500Å | $Ni_{90}Cr_{10}$ 400A | 3.8mW | 48dB |
| Example 26 | $Pt_{25}Tb_{36}Fe_{26}Co_{13}$ 250Å | $Ni_{80}Cr_{20}$ 1500A | 6.2mW | 49dB |
| Example 27 | $Pd_{7}Tb_{28}Fe_{54}Co_{11}$ 200Å | $Ni_{72}Cu_{28}$ 1800A | 7.2mW | 50dB |

Example 28

The procedure of Example 11 was repeated except that the cycloolefin type random copolymer [A] prepared in Polymerization Example (i) of Referential Example 1 was used in place of the cycloolefin type random copolymer composition obtained in Referential Example 1 to prepare a double-sided magnetooptical recording media.

In the same manner as in Example 11, the characteristics of the media was evaluated (but, with regard to Δ C/N, the measurement of Δ C/N was made after allowing the media to stand under the circumstances of 80°C and 85% RH for 1000 hours. The optimum power was 3.5 mW, C/H was 50 dB, and after the lapse of 1000 hours, Δ C/N was 0 dB.).

## Claims

(1) A magnetooptical recording medium comprising a substrate having thereon a magnetooptical recording film, said substrate being formed from a cycloolefin random copolymer composition which comprises

[A] a cycloolefin random copolymer of ethylene and a cycloolefin represented by the following general

formula [I], said copolymer having an intrinsic viscosity [η] of from 0.05 to 10 dl/g as measured at 135 °C in decalin and a softening temperature (TMA) of at least 70 °C, and

[B] a cycloolefin random copolymer of ethylene and a cycloolefin represented by the following general formula [I], said copolymer having an intrinsic viscosity [η] of from 0.05 to 5 dl/g as measured at 135 °C in decalin and a softening temperature (TMA) of less than 70 °C, and a weight ratio of said component [A]/said component [B] ranging from 100/0.1 to 100/10:

General formula

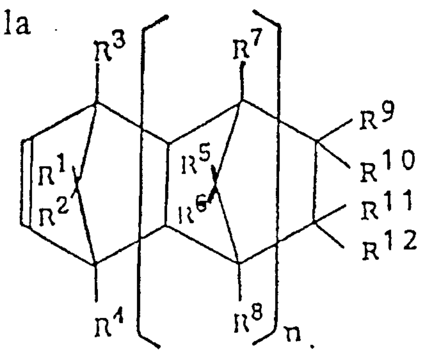

···[I]

wherein n is 0 or a positive integer, $R^1$ to $R^{12}$ are the same or different, and each represents a hydrogen atom, a halogen atom or a hydrocarbon group provided that $R^9$ to $R^{12}$, when taken together, may form a mono- or poly-cyclic hydrocarbon ring which may optionally have double bond or bonds, or $R^9$ and $R^{10}$ or $R^{11}$ and $R^{12}$, when taken together, may form an alkylidene group, and said magnetooptical recording film being an amorphous alloy film comprising (i) at least one element selected from 3d transition metals and (iii) at least one element selected from rare earth elements and having a magnetic easy axis perpendicular to the film.

2. The magnetooptical recording medium according to claim 1 wherein said magnetooptical recording film being a thin film of an amorphous alloy comprising (i) at least one 3d transition metal, (ii) at least one corrosion resistant metal and (iii) at least one rare earth element, the content of said corrosion resistant metal being from 5 to 30 atom% and having an easy axis of magnetization perpendicular to said films.

3. The magetooptical recording medium according to claim 1 wherein said 3d transition metal (i) contained in said magnetooptical recording film is Fe or Co, or the both.

4. The magnetooptical recording medium according to claim 1 wherein said corrosion resistant metal (ii) contained in said magnetooptical recording film is at least one element selected from Pt, Pd, Ti, Ta, Nb, Zr and Mo, and Hf.

5. The magnetooptical recording medium according to claim 1 wherein said corrosion resistant metal (ii) contained in said magnetooptical recording film is Pt or Pd, or the both.

6. The magnetooptical recording medium according to claim 1 wherein said rare earth element (iii) contained in said magnetooptical recording film is selected from Nd, Sm, Pr, Ce, Eu, Gd, Tb, Dy and Ho.

7. The magnetooptical recording medium according to claim 1 wherein said magnetooptical recording film contains from 40 to 80 atom % of the 3d transition metal (i) and more than 10 and not more than 30 atom % of the corrosion resistant metal (ii).

8. The magnetooptical recording medium according to claim 1 wherein said magnetooptical recording film is a thin film of an amorphous alloy comprising (i) at least one 3d transition metal and (ii) from 5 to 30 atom % of at least one corrosion resistant metal and has an easy axis of magnetization perpendicular to said films.

9. The magnetooptical recording medium according to claim 1 wherein said magnetooptical recording film is an amorphous alloy flm composed of (i) at least one element selected form 3d trandition metals and (iii) at least one element selected from rare earth elements and having a magnetic easy axis of magnetization perpendicular to the film.

10. The magnetooptical recording medium according to claim 1 wherein said rare earth element (iii) contained in said magnetooptical recording film is selected from Nd, Sm, Pr, Ce, Eu, Gd, Tb, Dy and Ho.

11. The magnetooptical recording medium according to the claim 1 wherein the reflection film is laminated on teh magnetooptical recording film.

FIG. 1

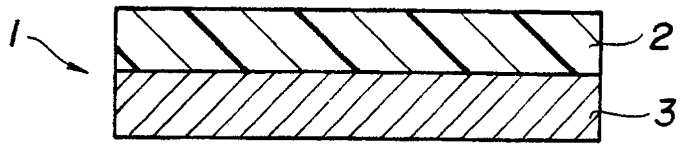


FIG. 2

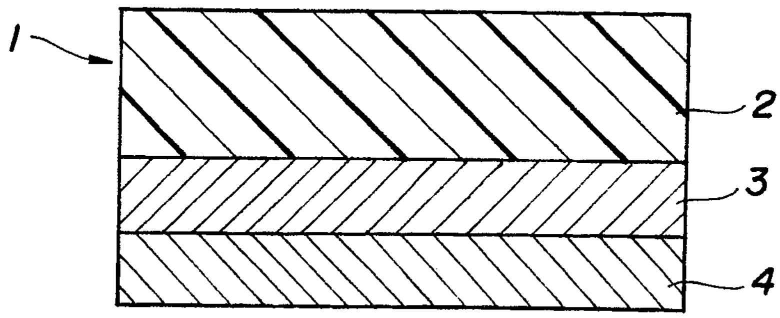


FIG. 3

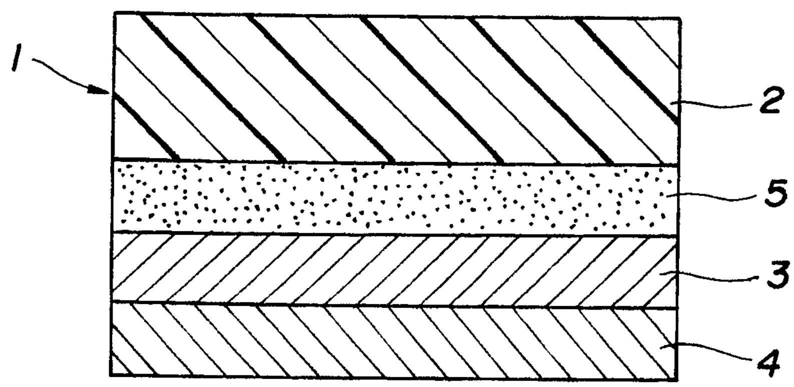

FIG. 4

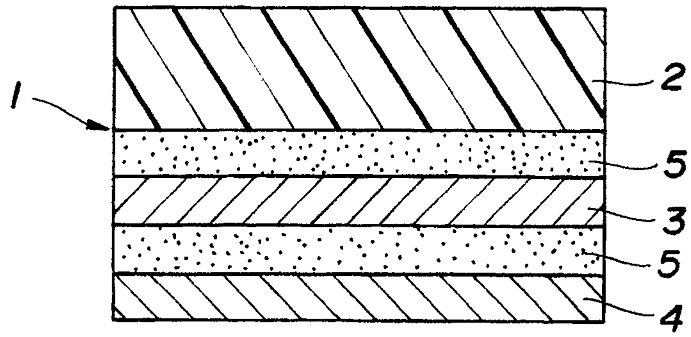
1
2
5
3
5
4

FIG. 5

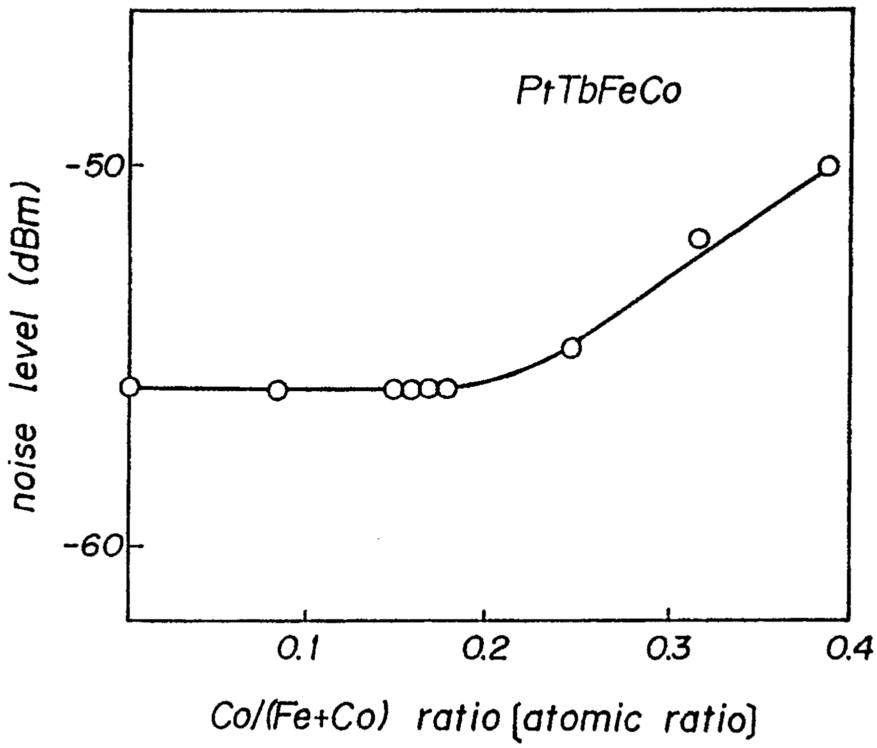
PtTbFeCo
-50
-60
noise level (dBm)
0.1
0.2
0.3
0.4
Co/(Fe+Co) ratio [atomic ratio]

FIG. 6

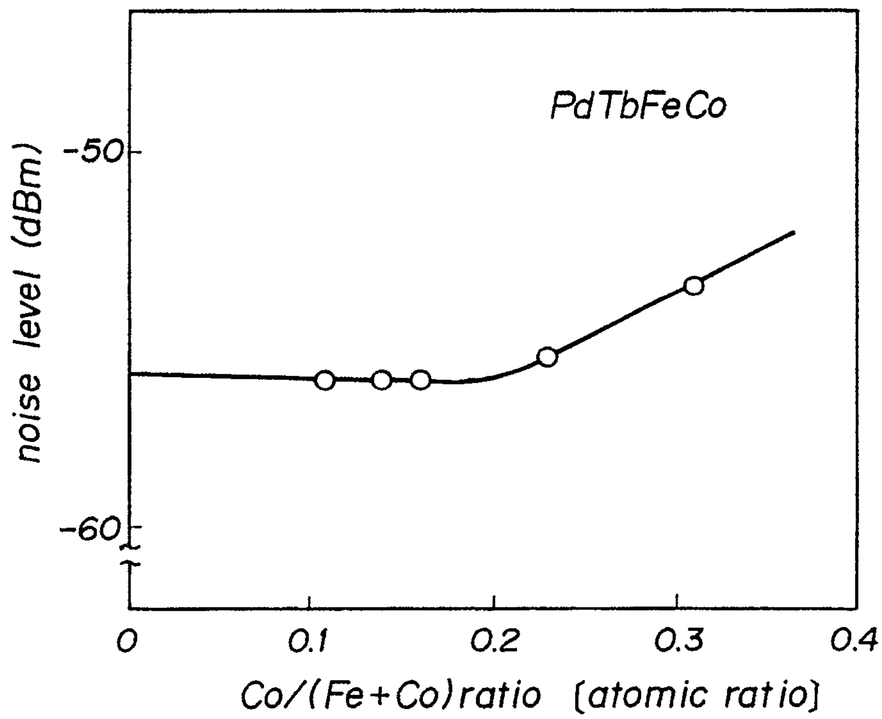
PdTbFeCo
-50
-60
noise level (dBm)
0
0.1
0.2
0.3
0.4
Co/(Fe+Co) ratio (atomic ratio)

FIG. 7

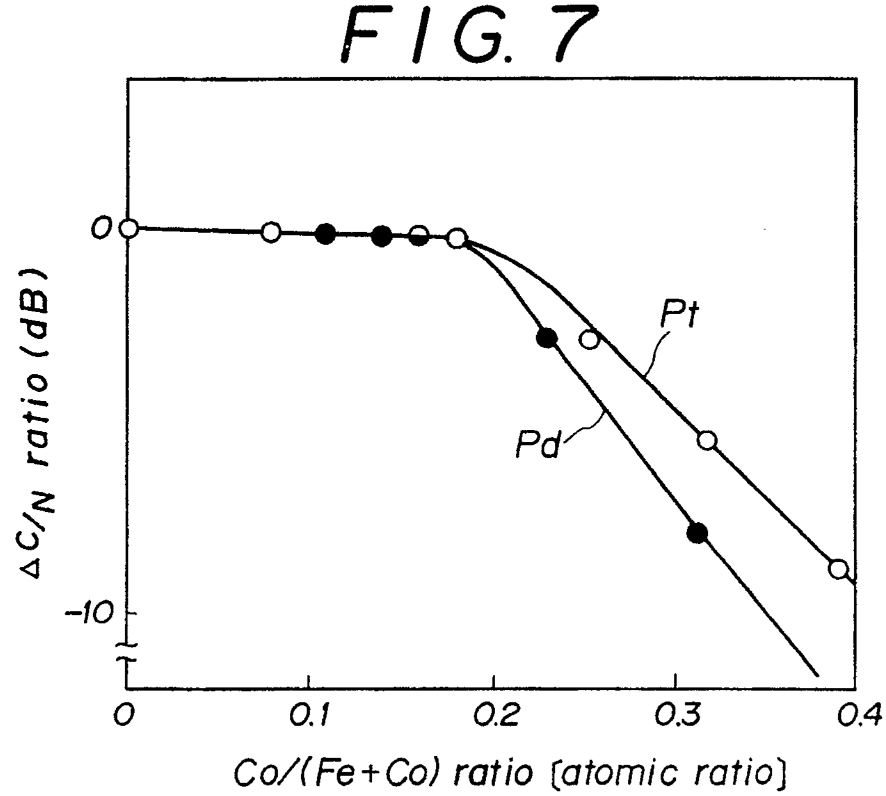
0
-10
ΔC/N ratio (dB)
Pt
Pd
0
0.1
0.2
0.3
0.4
Co/(Fe+Co) ratio (atomic ratio)
* ◒ indicates both ○ and ●

FIG. 8

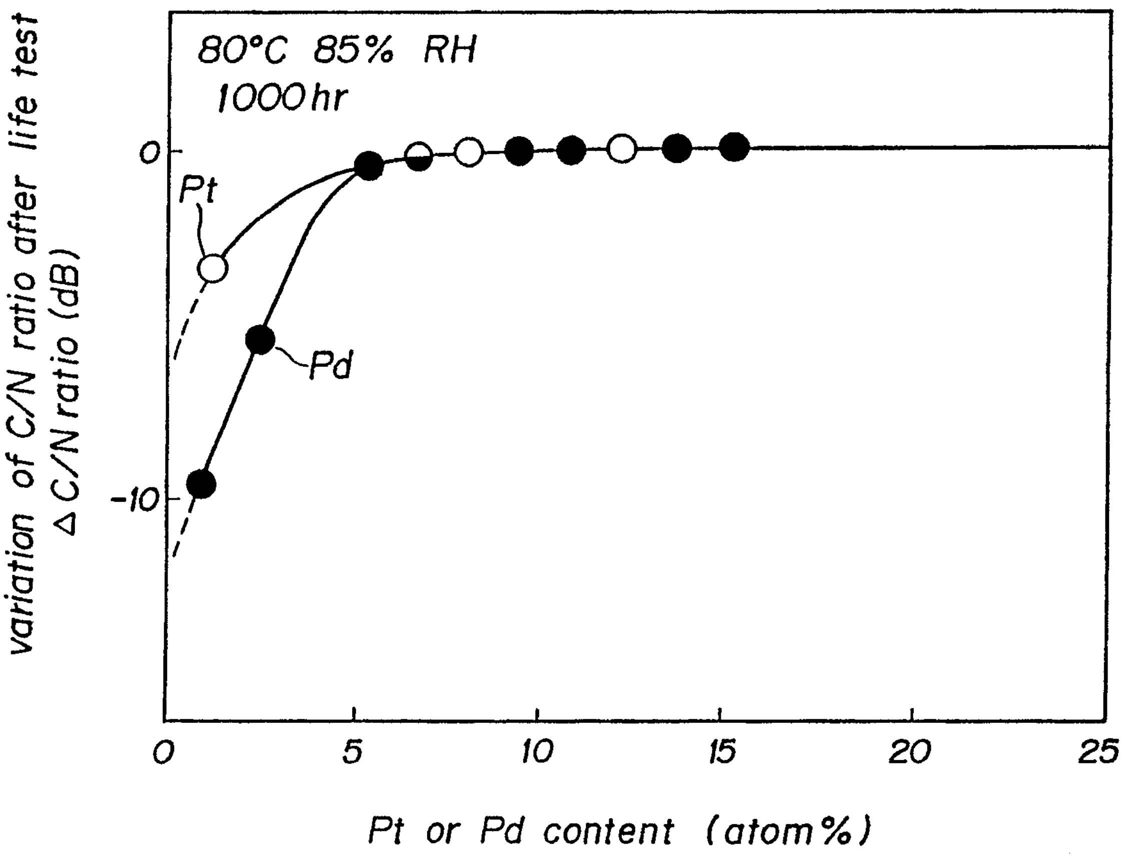


* ◒ indicates both ○ and ●

FIG. 9

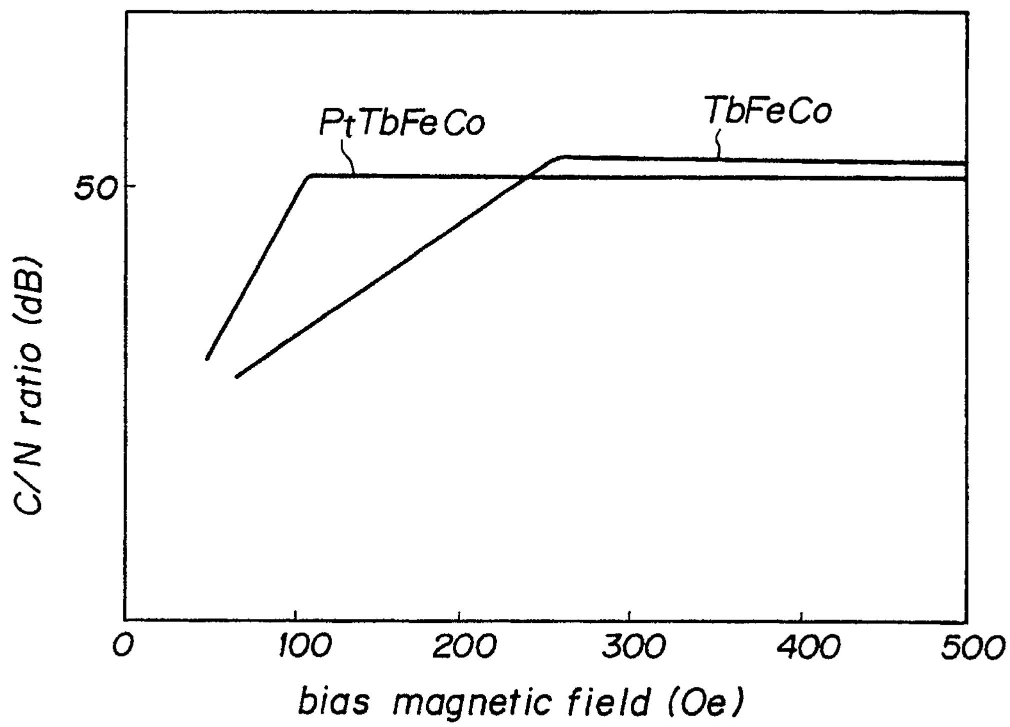
PtTbFeCo
TbFeCo
50
C/N ratio (dB)
0
100
200
300
400
500
bias magnetic field (Oe)

FIG. 10

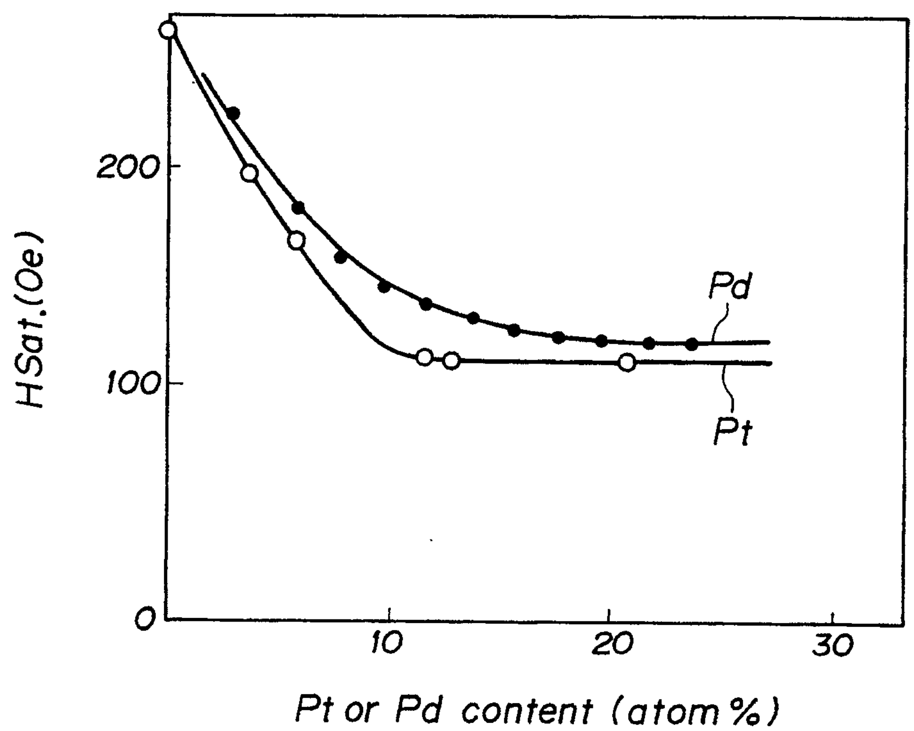
200
100
0
HSat.(Oe)
Pd
Pt
10
20
30
Pt or Pd content (atom %)